(19) Europäisches Patentamt / European Patent Office / Office européen des brevets

(11) EP 1 824 575 B1

(12) # EUROPÄISCHE PATENTSCHRIFT

(45) Veröffentlichungstag und Bekanntmachung des Hinweises auf die Patenterteilung:
**30.07.2008 Patentblatt 2008/31**

(21) Anmeldenummer: **05815301.6**

(22) Anmeldetag: **06.12.2005**

(51) Int Cl.:
***B01D 9/00*** *(2006.01)*

(86) Internationale Anmeldenummer:
**PCT/EP2005/013061**

(87) Internationale Veröffentlichungsnummer:
**WO 2006/061188 (15.06.2006 Gazette 2006/24)**

(54) **REINIGUNG VON IONISCHEN FLÜSSIGKEITEN**

PURIFICATION OF IONIC LIQUIDS

PURIFICATION DE LIQUIDES IONIQUES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **07.12.2004 DE 102004058907**

(43) Veröffentlichungstag der Anmeldung:
**29.08.2007 Patentblatt 2007/35**

(73) Patentinhaber: **BASF SE**
**67056 Ludwigshafen (DE)**

(72) Erfinder:
- **FIENE, Martin**
  **67150 Niederkirchen (DE)**
- **RUST, Harald**
  **67435 Neustadt (DE)**
- **MASSONNE, Klemens**
  **67098 Bad Dürkheim (DE)**
- **STEGMANN, Veit**
  **68167 Mannheim (DE)**
- **HUTTENLOCH, Oliver**
  **68809 Neulussheim (DE)**
- **HEILEK, Jörg**
  **69245 Bammental (DE)**

(74) Vertreter: **Isenbruck, Günter**
**Isenbruck, Bösl, Hörschler, Wichmann, Huhn**
**Patentanwälte**
**Theodor-Heuss-Anlage 12**
**68165 Mannheim (DE)**

(56) Entgegenhaltungen:
**EP-A- 0 694 517** **US-A- 5 755 975**

EP 1 824 575 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung betrifft ein Verfahren zur Reinigung von ionischen Flüssigkeiten.

Ionische Flüssigkeiten gewinnen als Lösungsmittel, z.B. bei Durchführung chemischer Reaktionen, zunehmend an Bedeutung. Peter Wasserscheidt, Chemie in unserer Zeit 37 (2003) Nr. 1, Seiten 52-63 gibt einen Überblick über den Einsatz ionischer Flüssigkeiten bei der Mehrphasenkatalyse. Dabei wird als ein Vorteil des Einsatzes von ionischen Flüssigkeiten als Lösungsmittel hervorgehoben, dass ionische Flüssigkeiten praktisch keinen messbaren Dampfdruck haben, und dass es daher bei ihrer Verwendung als Lösungsmittel nicht zu Lösungsmittelverlusten durch Verdampfen kommt. Der Vorteil der ionischen Flüssigkeiten, keinen messbaren Dampfdruck zu haben, ist dann nachteilig, wenn diese in einem Prozess als Lösungsmittel verwendet wird, bei dem hochsiedende Nebenprodukte gebildet werden, die destillativ oder extraktiv nicht wieder abgetrennt werden können.

Bei der Verwendung von ionischen Flüssigkeiten zur Durchführung chemischer Reaktionen ist die Reinheit der eingesetzten ionischen Flüssigkeit von großer Bedeutung. Verunreinigungen können z.B. den Verlauf der chemischen Reaktionen im Allgemeinen negativ beeinflussen. So wird z.B. durch P. Tyson et al. in Electrochemical Society Proceedings, vol. 99-41, Seite 161-168 auf Probleme beim Einsatz von chloridhaltigen ionischen Flüssigkeiten in der Flüssigphasenhydrierung und bei Durchführung der Suzuki-Reaktion hingewiesen. Es besteht daher ein Bedarf an ionischen Flüssigkeiten mit hoher Reinheit.

In der wissenschaftlichen Literatur wird immer wieder darauf hingewiesen, dass ionische Flüssigkeiten keine kristallinen Phasen ausbilden.

J.F. Brennecke, E.J. Maginn, AIChE Journal 47 (2001), 2384 charakterisieren ionische Flüssigkeiten als organische Salze, die einen hohen Grad an Asymmetrie aufweisen, welche eine geordnete Packung behindert und somit die Kristallisation inhibiert.

J.H.J. Davis, NATO Sci. Ser. II, 92 (2003), 385 weisen darauf hin, dass in ionischen Flüssigkeiten eines oder beide Ionen üblicher Weise große, polyatomare Spezies mit diffuser Ladungsverteilung und im Allgemeinen einer niedrigen Symmetrie sind.

D.W. Rooney, K.R. Seddon, Handbook of Solvents, herausgegeben von G. Wypych, Chem. Tech. Publishing 2001, Kapitel 21.2: "Ionic Liquids" beschreiben Phasendiagramme von ionischen Flüssigkeiten. Diese zeigen ein sehr komplexes Phasenverhalten mit mesomorph-kristallinen, flüssigkristallinen, glasartigen und flüssigen Bereichen.

P. Wasserscheid, T. Welton, Ionic Liquids in Synthesis, Wiley-VCH, Weinheim 2003, Kapitel 3.1.2.1 weisen darauf hin, dass typische ionische Flüssigkeiten beim Abkühlen glasartige Strukturen ausbilden. R.D. Rogers et al., Green Chemistry 3 (2001), 156 weisen darauf hin, dass ionische Flüssigkeiten zum Unterkühlen neigen und im festen Zustand häufig amorphe Strukturen ausbilden.

Ionische Flüssigkeiten im Sinne dieser Erfindung sind Salze, die bereits bei niedrigen Temperaturen, vorzugsweise unterhalb von 100°C, in flüssigem Aggregatzustand vorliegen.

Aufgabe der vorliegenden Erfindung ist es, ein technisch leicht realisierbares und einfach durchzuführendes Verfahren zur Reinigung von ionischen Flüssigkeiten bereit zu stellen. Aufgabe ist es insbesondere, ein derartiges Verfahren bereit zu stellen, mit dem auch hochsiedende Verbindungen von den ionischen Flüssigkeiten abgetrennt werden können.

Gelöst wird die Aufgabe durch ein Verfahren zur Aufreinigung einer ionischen Flüssigkeit, gemäß dem Gegenstand des Anspruchs 1.

Überraschenderweise wurde gefunden, dass sich ionische Flüssigkeiten - entgegen der vertretenen Lehrmeinung - aus ihrer Schmelze doch mit guter Reinigungswirkung kristallisieren lassen.

Verfahren zur Aufreinigung von Stoffen durch partielle Kristallisation aus der Schmelze sind an sich bekannt. Die teilweise Kristallisation führt zu einer Abreicherung der Verunreinigung im Kristallisat, welche in der Restschmelze verbleibt und mit dieser von dem Kristallisat abgetrennt wird. Die Schmelzkristallisation ist ein bei tiefen Temperaturen ablaufendes und damit thermisch schonendes Trennverfahren.

Die erfindungsgemäße partielle Kristallisation der ionischen Flüssigkeiten und die Abtrennung des Kristallisats von der Restschmelze kann ohne Beschränkung mit den bekannten Schmelzekristallisationsverfahren durchgeführt werden. Geeignete Verfahren sind in den Schriften DE 195 36 792 A1, DE 195 36 859 A1, den in DE 102 57 449 A1 auf Seite 4, Zeile 6 und 7 genannten Schriften, EP 0 616 998 B1 und US 3,597,164 offenbart. Der Druck bei der Kristallisation kann 0,01 bis 1000 bar, bevorzugt 0,1 bis 50 bar und besonders bevorzugt 0,8 bis 2 bar betragen. Die Temperatur in der kristallisierenden ionischen Flüssigkeit liegt im Bereich von 0,1 bis 80 Kelvin, bevorzugt im Bereich von 1 bis 40 Kelvin, besonders bevorzugt im Bereich von 2 bis 20 Kelvin unter dem Schmelzpunkt der reinen ionischen Flüssigkeit.

Die mit dem erfindungsgemäßen Verfahren zu reinigenden ionischen Flüssigkeiten weisen üblicherweise einen Gehalt an Verunreinigungen von 1 bis 60 Gew.-%, bevorzugt von 2 bis 40 Gew.-% und besonders bevorzugt von 5 bis 25 Gew.-% auf. Typische Verunreinigungen sind Substanzen mit niedrigem Dampfdruck, hochsiedende Substanzen, oligomere und polymere Verbindungen.

Mit dem erfindungsgemäßen Verfahren werden ionische Flüssigkeiten mit Reinheiten von 85 bis 99,999 Gew.-%, bevorzugt 90 bis 99,99 Gew.-% und besonders bevorzugt 95 bis 99,9 Gew.-% erhalten.

Im Allgemeinen lässt man die ionische Flüssigkeit so weit kristallisieren, dass wenigstens 5 Gew.-%, vorzugsweise wenigstens 10 Gew.-% und besonders bevorzugt wenigstens 20 Gew.-% der ionischen Flüssigkeit auskristallisiert sind. Typischerweise lässt man nicht mehr als 90 Gew.-%, vorzugsweise nicht mehr als 80 Gew.-% und insbesondere nicht mehr als 70 Gew.-% der eingesetzten ionischen Flüssigkeit auskristallisieren, um eine hinreichende Reinigungswirkung zu erzielen.

Die Kristallisation wird bevorzugt mit einem Impfvorgang eingeleitet. In einer besonderen Ausgestaltung des Impfvorgangs wird die nach dem Abschmelzen auf den Kühlflächen als Restfilm verbliebene Flüssigkeit als Impfkristallisat an der Kühlfläche partiell oder vollständig ausgefroren und danach erneut eine Kristallisation durchgeführt. Das Impfkristallisat kann auch dadurch erzeugt werden, dass auf die Kühlfläche in einem separaten Schritt mit einer, bezogen auf die zu reinigende ionische Flüssigkeit, reineren Schmelze der ionischen Flüssigkeit in Kontakt gebracht und durch Abkühlen lassen eine Schicht aus Impfkristallisat gebildet wird. Auch hierbei wird der auf den Kühlflächen verbleibende Restfilm aus ionischer Flüssigkeit durch Temperaturabsenkung an den Flächen partiell oder vollständig ausgefroren. Auch kann die Kühlfläche zur Erzeugung einer Impfkristallschicht mit einer kristallhaltigen Suspension der ionischen Flüssigkeit in Kontakt gebracht werden, um nach Entfernen der Suspension durch Abkühlung der Kühlfläche eine Impfkristallschicht zu erhalten. Ebenso kann ein Impfen durch Zugabe von Kristallen als Feststoff oder als Suspension zur Schmelze der ionischen Flüssigkeit, die dabei eine Temperatur nahe oder unterhalb der Schmelztemperatur aufweist, erreicht werden. Ein Impfen kann auch durch Erzeugung einer Kristallschicht auf einer lokal begrenzten, separat gekühlten Kühlfläche (cold spot) erreicht werden.

Das erfindungsgemäße Reinigungsverfahren kann als statische Schmelzekristallisation durchgeführt werden. Bei der statischen Kristallisation handelt es sich um ein diskontinuierliches Verfahren, bei dem die flüssige Phase (Schmelze) während der Kristallisation in einem statischen Kristallisator ruht oder nur durch freie Konvektion bewegt wird. Die Ausbildung der Kristalle erfolgt an oder in der Nähe von Kühlflächen im Kristallisator. Diese Kühlflächen können eine beliebige Form aufweisen. Es können ein oder mehrere Kühlflächen vorhanden sein. Vorzugsweise sind die Kühlflächen zylindrisch geformte Kühlflächen, z.B. Rohre, oder ebene Kühlflächen, z. B. Platten. Die Kühlflächen können glatt, profiliert oder mit Rippen versehen sein. Neben den Kühlflächen können weitere Einbauten zum Abstützen/Halten des Kristallisats in den Kristallisator eingebaut sein.

Die partielle Kristallisation der ionischen Flüssigkeit wird durch Abkühlen des Kristallisatorinhalts um einige Kelvin bis mehrere 10 Kelvin erreicht, im Allgemeinen über einen Zeitraum von einigen Stunden bis einigen Tagen. Nach der partiellen Kristallisation erfolgt die Trennung von Restschmelze und Kristallisat, in der Regel durch einfaches Ablaufen lassen der Restschmelze über einen Zeitraum von bis zu mehreren Stunden. Danach kann sich ein mehrstündiger bis mehrtägiger Wasch- oder Schwitzvorgang zur weiteren Reinigung des Kristallisats anschließen. Beim Waschen/Schwitzen wird die Temperatur der Kristalle zwischen der Kristallisations-Endtemperatur und der Schmelztemperatur der reinen ionischen Flüssigkeit gewählt. Beim Schwitzen werden im Allgemeinen 1 bis 60 Gew.-%, bevorzugt 5 bis 50 Gew.-% und besonders bevorzugt 10 bis 40 Gew.-% der zunächst erzeugten Kristalle wieder aufgeschmolzen. Nach dem Waschen/Schwitzen kann das gereinigte Kristallisat durch Erwärmen auf Temperaturen oberhalb des Schmelzpunktes (1 bis 50 Kelvin, bevorzugt 5 bis 30 Kelvin oberhalb des Schmelzpunktes) abgeschmolzen und als Flüssigkeit erhalten werden.

In einer bevorzugten Ausführungsform wird das erfindungsgemäße Verfahren als dynamische Schmelzekristallisation durchgeführt. Bei der dynamischen Schmelzekristallisation wird während der Kristallisation die flüssige Phase durch erzwungene Konvektion bewegt. Letzteres kann durch eine erzwungene Strömung in voll durchströmten oder voll gefüllten Apparaten oder durch die Aufgabe eines Riesel- oder Fallfilms auf eine gekühlte Wand erfolgen. Ebenso kann bei der dynamischen Kristallisation das Kristallisat, z.B. in Form einer Kristallschicht, durch die Schmelze bewegt werden.

Die dynamische Kristallisation kann als dynamische Schichtkristallisation erfolgen. Die dynamische Schichtkristallisation kann kontinuierlich oder diskontinuierlich erfolgen.

Die Durchführung der kontinuierlichen dynamischen Schichtkristallisation unterliegt keinen Beschränkungen. Bevorzugt werden hier bewegte Kühlflächen eingesetzt wie z.B. Kühlbänder oder Kühlwalzen.

Die Durchführung der diskontinuierlichen dynamischen Schichtkristallisation, bevorzugt als Fallfilmschichtkristallisation oder als Schichtkristallisation in einem Kristallisator vom Typ des voll durchströmten Rohres, unterliegt keinen Beschränkungen. Die dynamische Schichtkristallisation an ruhenden Kühlflächen kann wie folgt durchgeführt werden: Die Kristalle der ionischen Flüssigkeit werden auf die Kühlfläche aufgebracht, indem die Kühlfläche mit einem flüssigen Stoffgemisch, das die zu reinigende ionische Flüssigkeit enthält, in Kontakt gebracht wird und durch Abkühlung der Kühlfläche die entsprechenden Kristalle gebildet werden. Zur Bildung der Kristalle wird die Kühlfläche vorzugsweise auf eine Temperatur im Temperaturbereich von der Schmelztemperatur der festen ionischen Flüssigkeit bis zu 60 K darunter, vorzugsweise bis zu 40 K darunter, abgekühlt. Beim Erreichen der gewünschten Kristallmasse wird der Abkühlvorgang beendet. Danach kann die nicht kristallisierte, an der Verunreinigung angereicherte Restflüssigkeit abgeführt und somit von den Kühlflächen bzw. den gebildeten Kristallen entfernt werden. Das Abführen der Restflüssigkeit kann durch

einfaches Abfließen lassen oder Abpumpen erfolgen.

Danach kann ein Wasch- und/oder Schwitzschritt durchgeführt werden. Beim Waschen werden die auf den Kühlflächen gewachsenen Kristalle mit einer Waschflüssigkeit in Kontakt gebracht und wieder von dieser getrennt. Dadurch wird die auf den Kristallen verbliebene Restflüssigkeit durch die reinere Waschflüssigkeit ausgetauscht. Insbesondere bei längerer Verweilzeit der Waschflüssigkeit auf den Kristallen erfolgt auch ein diffusiver Austausch von Verunreinigungen zwischen der reineren Waschflüssigkeit und weniger reinen Bereichen des Kristallisats. Als Waschflüssigkeit wird vorzugsweise die Reinschmelze der ionischen Flüssigkeit verwendet. Beim Schwitzen wird nach Abführen der Restflüssigkeit die Temperatur der Kristalle auf der Kühlfläche auf einen Wert angehoben, der zwischen der Gefrierpunkttemperatur der Restschmelze und der Schmelztemperatur der reinen ionischen Flüssigkeit liegt. Das Schwitzen ist insbesondere dann vorteilhaft, wenn die Kristalle der ionischen Flüssigkeit nicht als kompakte Kristallschicht, sondern als poröses, einschlussreiches Haufwerk vorliegen. Beim Schwitzen werden üblicherweise 1 bis 30 Gew.-%, bevorzugt 2 bis 20 Gew.-% und besonders bevorzugt 3 bis 15 Gew.-% der zunächst erzeugten Kristalle aufgeschmolzen. Danach können die Kristalle durch Erwärmung verflüssigt und kann die entstandene, an der Verunreinigung abgereicherte Flüssigkeit abgeführt werden, was z.B. wiederum durch einfaches Abfließen lassen oder Abpumpen erfolgen kann. Die Verflüssigung der Kristalle erfolgt vorzugsweise in einem Temperaturbereich vom Schmelzpunkt der jeweiligen ionischen Flüssigkeit bis 50 K darüber, insbesondere bis 30 K darüber.

Die bei der dynamischen Schichtkristallisation eingesetzten Kühlflächen unterliegen keiner Beschränkung und können beliebige Form aufweisen. Es können ein oder mehrere Kühlflächen eingesetzt werden. Vorzugsweise werden zylindrisch geformte Kühlflächen, z.B. Rohre, oder ebene Kühlflächen eingesetzt. Die Kühlflächen können glatt oder profiliert sein. Hierbei können die Kühlflächen entweder vollständig in die Schmelze, aus der die ionische Flüssigkeit partiell kristallisiert wird, eingetaucht sein oder nur von einem Rieselfilm dieser Flüssigkeit überströmt werden, z.B. in einem vollständig durchströmten oder in einem von einem Rieselfilm durchströmten oder überströmten Rohr. Die Kühlflächen können auch mit einem Zulauf und einem Ablauf versehene Teile eines Wärmetauschers sein.

Die dynamische Schmelzekristallisation wird besonders bevorzugt als Suspensionskristallisation durchgeführt. Die dynamische Suspensionskristallisation kann kontinuierlich oder diskontinuierlich erfolgen. Geeignete Kristallisatoren sind beispielsweise Rührkessel- und Kühlscheibenkristallisatoren, Kratzkühler mit Zwangsumlauf, Blasensäulenkristallisatoren und Kristallisierkolonnen.

Bei der Suspensionskristallisation handelt es sich um ein Kristallisationsverfahren, bei dem aus einem in der Regel feststofffreien, flüssigen Mehrkomponenten-System als Ausgangsmaterial, das als Schmelze vorliegt, durch Wärmeabführung in der Masse des Ausgangsmaterials Einzelkristalle gebildet werden. Die aus Restschmelze und dispergierten Einzelkristallen bestehende Kristallsuspension wird während der Suspensionskristallisation bewegt, wozu insbesondere ein Umpumpen oder Rühren geeignet ist. Eine Haftung von Kristallen an Flächen ist hierbei nicht notwendig, sie ist sogar unerwünscht. Da die Kristallsuspension bewegt wird, wird die Suspensionskristallisation den dynamischen Kristallisationsverfahren zugerechnet.

Bei der Suspensionskristallisation durch indirekte Kühlung wird die Wärme über Kratzkühler, die mit einem Rührkessel oder einem Behälter ohne Rührwerk verbunden sind, abgeführt. Der Umlauf der Kristallsuspension wird hierbei durch eine Pumpe gewährleistet. Daneben besteht auch die Möglichkeit, die Wärme über die Wand eines Rührkessels mit wandgängigem oder nicht wandgängigem Rührer abzuführen. Eine weitere bevorzugte Ausführungsform bei der Suspensionskristallisation ist die Verwendung von Kühlscheibenkristallisatoren, wie sie beispielsweise von der Firma GMF (Gouda in Holland) hergestellt werden. Bei einer weiteren geeigneten Variante der Suspensionskristallisation durch Kühlung wird die Wärme über herkömmliche Wärmeüberträger (bevorzugt Rohrbündel- oder Plattenwärmeüberträger) abgeführt. Diese Apparate besitzen im Gegensatz zu Kratzkühlem, Rührkesseln mit wandgängigen Rührern oder Kühlscheiben keine Vorrichtung zur Vermeidung von Kristallschichten auf den Wärme übertragenden Flächen. Wird im Betrieb ein Zustand erreicht, bei dem der Wärmedurchgangswiderstand durch Verkrustung einen zu hohen Wert annimmt, erfolgt die Umschaltung auf einen zweiten Apparat. Während der Betriebszeit des zweiten Apparates wird der erste Apparat regeneriert (vorzugsweise durch Abschmelzen der Kristallschicht oder Durchspülen des Apparats mit überhitzter Schmelze). Wird im zweiten Apparat ein zu hoher Wärmedurchgangswiderstand erreicht, schaltet man wieder auf den ersten Apparat um, usw. Diese Variante kann auch mit mehr als zwei Apparaten im Wechsel betrieben werden.

Die Kühlung der kristallisierenden ionischen Flüssigkeiten kann auch durch direkte Kühlung erfolgen, z.B. durch Einleiten eines kalten Gases, einer kalten, bevorzugt unpolaren Flüssigkeit oder einer verdampfenden, bevorzugt unpolaren Flüssigkeit in die kristallisierende ionischen Flüssigkeit. Bei Flüssigkeiten werden bevorzugt solche verwendet, die mit der ionischen Flüssigkeiten nicht oder kaum mischbar sind.

Die Suspensionskristallisation, insbesondere die diskontinuierliche Suspensionskristallisation, wird bevorzugt mit einem Impfvorgang eingeleitet. Ein Impfen kann durch Zugabe von Kristallen als Feststoff oder als Suspension zur Schmelze der ionischen Flüssigkeit erreicht werden, wobei sich dann die Schmelze der ionischen Flüssigkeit zum Zugabezeitpunkt auf einer Temperatur nahe oder unterhalb der Schmelztemperatur der ionischen Flüssigkeit befindet. Die zugegebenen Kristalle können speziell behandelt, z.B. zerkleinert und/oder gewaschen werden. Ein Impfen kann

auch durch Erzeugung einer Kristallschicht auf einer lokal begrenzten, separat gekühlten Kühlfläche (cold spot) erreicht werden. Impfkristalle können auch von einer solchen separat gekühlten Fläche entfernt (z.B. mechanisch, durch Strömungskräfte oder durch Ultraschall) und in die Schmelze der ionischen Flüssigkeit eingetragen werden.

Ein Animpfen der Kristallisation kann auch dadurch erreicht werden, dass man die flüssige ionische Flüssigkeit zunächst stark abkühlt, bis spontan oder unter Anwendung eines zuvor beschriebenen Impfvorgangs eine Kristallbildung einsetzt, dann die Temperatur der Suspension wieder anhebt, um einen großen Teil des so gebildeten Kristallisats wieder aufzuschmelzen, und anschließend in Anwesenheit des verbliebenen Restkristallisats (Impfkristalle) langsamer und gezielt abkühlt, um die gewünschte Suspension zu erzeugen.

Für die Trennung der nach der dynamischen Kristallisation erhaltenen Suspension eignen sich alle bekannten Verfahren der Fest-Flüssig-Trennung. Vorzugsweise werden die Kristalle durch Filtrieren, Sedimentieren und/oder Zentrifugieren von der Restschmelze abgetrennt. Es ist jedoch auch möglich, die Restschmelze vom dann bevorzugt ruhenden Kristallisat zum Beispiel durch Ablaufen lassen zu entfernen. Vorteilhafterweise wird dem Filtrieren, Sedimentieren oder Zentrifugieren eine Voreindickung der Suspension, z.B. durch Hydrozyklone, vorgeschaltet. Zum Zentrifugieren eignen sich alle bekannten Zentrifugen, die diskontinuierlich oder kontinuierlich arbeiten. Besonders vorteilhaft werden Schubzentrifugen verwendet, die ein- oder mehrstufig betrieben werden können. Daneben eignen sich auch Schneckensiebzentrifugen oder Schneckenaustragszentrifugen (Dekanter). Eine Filtration erfolgt vorteilhafterweise mittels Filtemutschen, die kontinuierlich oder diskontinuierlich, mit oder ohne Rührwerk, oder mittels Bandfilter betrieben werden. Allgemein kann das Filtrieren unter Druck oder im Vakuum erfolgen. Während und/oder nach der Fest-Flüssig-Trennung können weitere Verfahrensschritte zur Steigerung der Reinheit der Kristalle bzw. des Kristallkuchens vorgesehen werden. In einer besonders vorteilhaften Ausgestaltung der Erfindung schließt sich nach dem Abtrennen der Kristalle von der Restschmelze ein ein- oder mehrstufiges Waschen und/oder Schwitzen der Kristalle oder des Kristallkuchens an. Die verwendete Waschflüssigkeit unterliegt hierbei keiner Einschränkung. Vorteilhafterweise wird jedoch mit Reinware gewaschen, d.h. mit einer Flüssigkeit, deren Reinheit höher ist als die der Restschmelze. Das Waschen kann in hierfür üblichen Apparaten erfolgen, wie Waschkolonnen, in denen die Abtrennung der Restschmelze und das Waschen in einem Apparat erfolgen, in Zentrifugen, die ein- oder mehrstufig betrieben werden können, oder in Filternutschen oder Bandfiltern. Das Waschen kann auf Zentrifugen oder Bandfiltern ein- oder mehrstufig durchgeführt werden, wobei die Waschflüssigkeit im Gegenstrom zum Kristallkuchen geführt werden kann. Daneben kann ein so genanntes Schwitzen zur Erhöhung der Reinheit der Kristalle vorgesehen sein, bei dem es sich um ein lokales Abschmelzen verunreinigter Bereiche handelt. Besonders bevorzugt ist bei der Suspensionskristallisation die Durchführung des Schwitzens auf Zentrifugen oder Bandfiltern, jedoch kann auch die Durchführung einer Kombination aus Waschen und Schwitzen in einem Apparat geeignet sein.

Besonders bevorzugt werden die für die Fest-Flüssig-Trennung, das Waschen und insbesondere für das Schwitzen der Kristalle eingesetzten Apparate von außen und/oder von innen beheizt und/oder mit einem erwärmten Gas beaufschlagt. Die Beheizungstemperatur wird in einem Temperaturbereich oberhalb der Kristallisationstemperatur, in der Regel 1 bis 60 K, bevorzugt 2 bis 30 K oberhalb der Kristallisationstemperatur der ionischen Flüssigkeit gewählt.

Als Waschflüssigkeit für das Kristallisat einer gegebenen Kristallisationsstufe kann der Zulauf zu derselben Kristallisationsstufe eingesetzt werden. Bevorzugt wird dabei das Massenverhältnis von Waschflüssigkeit zu Kristallisat im Bereich von 0,05 bis 1 kg, besonders bevorzugt im Bereich von 0,1 bis 0,6 kg Waschflüssigkeit pro kg Kristallisat eingestellt. Dieses Massenverhältnis kann auch bei Verwendung anderer Waschflüssigkeiten eingestellt werden. Als Waschflüssigkeit wird besonders bevorzugt bereits gereinigte ionische Flüssigkeit eingesetzt, die durch das erfindungsgemäße Verfahren nach Aufschmelzen der abgetrennten und durch Waschen und/oder Schwitzen weiter gereinigten Kristalle erhalten wird. Die Temperatur der Waschflüssigkeit liegt bevorzugt in einem Temperaturbereich oberhalb der Kristallisationstemperatur, in der Regel 1 bis 30 K oberhalb des Schmelzpunkts der ionischen Flüssigkeit.

Die separierten und gereinigten Kristalle der ionischen Flüssigkeiten müssen nicht durch Aufschmelzen verflüssigt werden. Ebenso kann ein Auflösen der Kristalle in einem geeigneten Lösemittel erfolgen.

Die erfindungsgemäße partielle Kristallisation der ionischen Flüssigkeiten kann ein- oder mehrstufig durchgeführt werden. Dabei können mehrere diskontinuierlich oder kontinuierlich durchgeführte Kristallisationsstufen hintereinander geschaltet werden, wobei die einzelnen Stufen auch nach mehreren verschiedenen Kristallisationsverfahren (beispielsweise statisch und dynamisch, Suspensions- oder Schichtkristallisation) ausgeführt werden können. In einer bevorzugten Ausführungsform des erfindungsgemäßen Verfahrens wird die Kristallisation mehrstufig als fraktionierte Kristallisation ausgeführt. Üblicherweise werden bei einer fraktionierten Kristallisation alle Stufen oberhalb der Zuführung des Ausgangsgemisches, das heißt zu reineren Gemischen hin, Reinigungsstufen genannt und alle anderen Stufen, das heißt unterhalb der Zuführung des Ausgangsgemisches, Abtriebsstufen genannt. Zweckmäßigerweise werden mehrstufige Kristallisationsverfahren nach dem Gegenstromprinzip betrieben, wonach das Kristallisat jeder Stufe nach Abtrennung von der Restschmelze der Stufe mit dem nächst höheren Reinheitsgrad zugeführt wird, während der Kristallisationsrückstand, d.h. die Restschmelze, der Stufe mit dem nächst niedrigeren Reinheitsgrad zugeführt wird. Dabei werden üblicherweise die Kristallisationsstufen entsprechend dem Reinheitsgrad des jeweiligen Kristallisats als höhere bzw. niedrigere Kristallisationsstufen bezeichnet. Entsprechend wird die Abtriebsstufe, die das Kristallisat beziehungsweise die Restschmelze mit dem niedrigsten Reinheitsgrad erzeugt, als unterste Kristallisationsstufe bezeichnet, die Reinigungsstufe mit dem höchsten Reinheitsgrad als oberste Stufe bezeichnet.

Geeignete Kristallisationsapparate zur Durchführung der kontinuierlichen fraktionierten Kristallisation sind Gegenstromkristallisationskolonnen wie die Phillips-Kolonne, die Gegenstromkolonne nach Schildknecht sowie die Gegenstromkolonne mit oberem und unterem Rücklauf. Die fraktionierte Kristallisation kann auch mittels mehrstufiger Schichtkristallisation durchgeführt werden (z.B. Kombination von statischer und dynamischer Kristallisation).

In einer speziellen Variante des erfindungsgemäßen Verfahrens wird die partielle Kristallisation der ionischen Flüssigkeiten als Zonenschmelzverfahren durchgeführt.

Bei dem erfindungsgemäßen Zonenschmelzverfahren wird die kristalline ionische Flüssigkeit in einen stabförmigen Behälter eingebracht oder selbst in Stabform gebracht und relativ zu einer schmalen, ringförmigen Heizzone, die um den Stab herum angeordnet ist, bewegt, wobei sich eine schmale Schmelzzone ausbildet, welche langsam durch den Stab wandert und die Verunreinigungen aufnimmt. Das zonenweise Beheizen der stabförmig angeordneten kristallinen ionischen Flüssigkeit kann beispielsweise durch Widerstandsheizung mittels um den Stab herum angeordneten Heizleitern erfolgen. Das zonenweise Beheizen kann auch mittels Induktionsheizung, oder mittels beliebiger weiterer geeigneter Heizverfahren erfolgen. Die Wanderungsgeschwindigkeit der Heiz- bzw. Schmelzzone beträgt im Allgemeinen 0,1 bis 100 mm/h. Es können mehrere aufeinander folgende Heizzonen angeordnet sein, wobei diese ausreichend voneinander beabstandet sind, um ein vollständiges Kristallisieren der ionischen Flüssigkeit zwischen zwei aufeinander folgenden Aufschmelzvorgängen zu gewährleisten. Ein vollständiges Kristallisieren der ionischen Flüssigkeiten nach dem Aufschmelzen kann durch auf die Heizzonen folgende Kühlzonen unterstützt werden. Diese können beispielsweise als mit einem Kühlmedium durchströmte Rohrschlangen ausgebildet sein.

Ionische Flüssigkeiten im Sinne der vorliegenden Erfindung sind Salze der allgemeinen Formel

$$[A]_n^+ \, [Y]^{n-}$$

wobei n = 1, 2, 3 oder 4 ist,
oder gemischte Spezies der allgemeinen Formel

$$[A^1]^+[A^2]^+ \, [Y]^{2-}, \, [A^1]^+[A^2]^+[A^3]^+ \, [Y]^{3-} \text{ oder } [A^1]^+[A^2]^+[A^3]^+[A^4]^+ \, [Y]^{4-}$$

wobei $A^1$, $A^2$, $A^3$ und $A^4$ unabhängig voneinander aus den für [A] genannten Gruppen ausgewählt sind,
oder gemischte Spezies mit Metallkationen

$$[A^1]^+[A^2]^+[A^3]^+[M^1]^+ \, [Y]^{4-}, \, [A^1]^+[A^2]^+[M^1]^+[M^2]^+ \, [Y]^{4-},$$

$$[A^1]^+[M^1]^+[M^2]^+[M^3]^+ \, [Y]^{4-}, \, [A^1]^+[A^2]^+[M^1]^+ \, [Y]^{3-}, \, [A^1]^+[M^1]^+[M^2]^+ \, [Y]^{3-},$$

$$[A^1]^+[M^1]^+ \, [Y]^{2-}, \, [A^1]^+[A^2]^+[M^4]^{2+} \, [Y]^{4-}, \, [A^1]^+[M^1]^+[M^4]^{2+} \, [Y]^{4-},$$

$$[A^1]^+[M^5]^{3+} \, [Y]^{4-}, \, [A^1]^+[M^4]^{2+} \, [Y]^{3-}$$

wobei $M^1$, $M^2$, $M^3$ einwertige Metallkationen, $M^4$ zweiwertige Metallkationen und $M^5$ dreiwertige Metallkationen darstellen.

Verbindungen, die sich zur Bildung des Kations $[A]_n^+$ von ionischen Flüssigkeiten eignen, sind z.B. aus DE 102 02 838 A1 bekannt. So können solche Verbindungen Sauerstoff-, Phosphor-, Schwefel- oder insbesondere Stickstoffatome enthalten, beispielsweise mindestens ein Stickstoffatom, bevorzugt 1-10 Stickstoffatome, besonders bevorzugt 1-5, ganz besonders bevorzugt 1-3 und insbesondere 1-2 Stickstoffatome. Gegebenenfalls können auch weitere Heteroatome wie Sauerstoff-, Schwefel- oder Phosphoratome enthalten sein. Das Stickstoffatom ist ein geeigneter Träger der positiven Ladung im Kation der ionischen Flüssigkeit, von dem im Gleichgewicht dann ein Proton bzw. ein Alkylrest auf das Anion übergehen kann, um ein elektrisch neutrales Molekül zu erzeugen.

Bei der Synthese der ionischen Flüssigkeiten wird zunächst durch Quaternisierung am Stickstoffatom etwa eines Amins oder Stickstoff-Heterocyclus' ein Kation erzeugt. Die Quaternisierung kann durch Protonierung oder Alkylierung des Stickstoffatoms erfolgen. Je nach verwendetem Protonierungs- bzw. Alkylierungsreagens werden Salze mit unterschiedlichen Anionen erhalten. In Fällen, in denen es nicht möglich ist, das gewünschte Anion bereits bei der Quaternisierung zu bilden, erfolgt dies in einem weiteren Syntheseschritt. Ausgehend beispielsweise von einem Ammoniumhalogenid kann das Halogenid mit einer Lewissäure umgesetzt werden, wobei aus Halogenid und Lewissäure ein komplexes Anion gebildet wird. Alternativ dazu ist der Austausch eines Halogenidions gegen das gewünschte Anion möglich. Dies kann durch Zugabe eines Metallsalzes unter Ausfällung des gebildeten Metallhalogenids, über einen Ionenaustauscher oder durch Verdrängung des Halogenidions durch eine starke Säure (unter Freisetzung der Halogenwasserstoffsäure) geschehen. Geeignete Verfahren sind beispielsweise in Angew. Chem. 2000, 112, S. 3926 - 3945 und der darin zitierten Literatur beschrieben.

Geeignete Alkylreste, mit denen das Stickstoffatom in den Aminen oder Stickstoff-Heterocyclen quaternisiert ist, sind $C_1$ bis $C_{18}$ -Alkyl, bevorzugt $C_1$ bis $C_{10}$-Alkyl, besonders bevorzugt $C_1$ bis $C_6$-Alkyl und ganz besonders bevorzugt Methyl.

Bevorzugt sind solche Verbindungen, die mindestens einen fünf- bis sechsgliedrigen Heterocyclus enthalten, der mindestens ein Stickstoffatom sowie gegebenenfalls ein Sauerstoff- oder Schwefelatom aufweist, besonders bevorzugt sind solche Verbindungen, die mindestens einen fünf- bis sechsgliedrigen Heterocyclus enthalten, der ein, zwei oder drei Stickstoffatome und ein Schwefel- oder ein Sauerstoffatom aufweist, ganz besonders bevorzugt solche mit zwei Stickstoffatomen.

Besonders bevorzugte Verbindungen sind solche, die ein Molgewicht unter 1000 g/mol aufweisen, ganz besonders bevorzugt unter 500 g/mol und insbesondere unter 250 g/mol.

Weiterhin sind solche Kationen bevorzugt, die ausgewählt sind aus den Verbindungen der Formeln (Ia) bis (It),

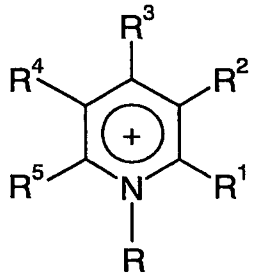

(a)

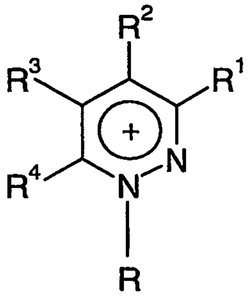

(b)

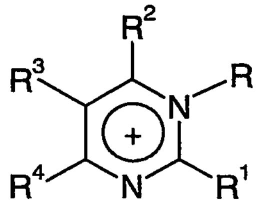

(c)

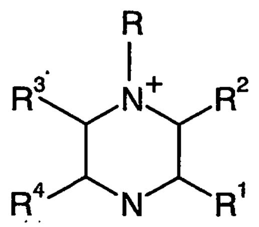

(d)

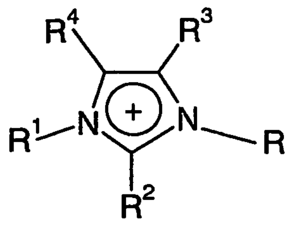

(e)

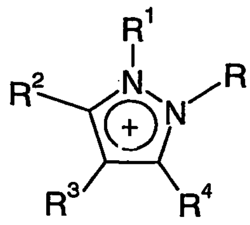

(f)

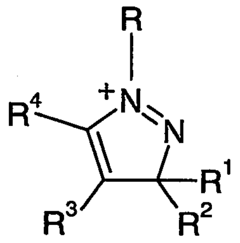
(g)

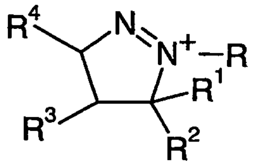
(g')

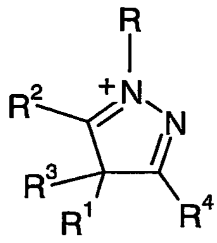
(h)

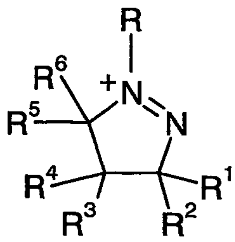
(i)

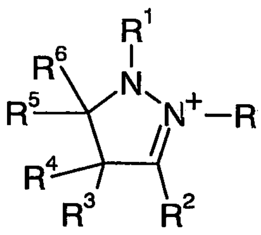
(j)

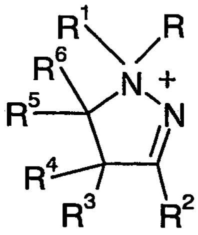
(j')

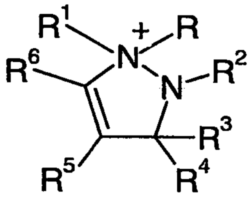
(k)

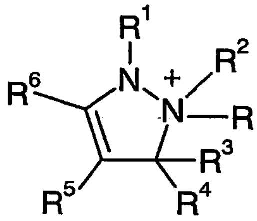
(k')

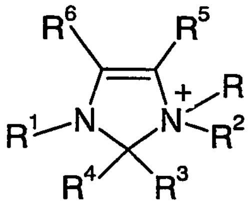
(l)

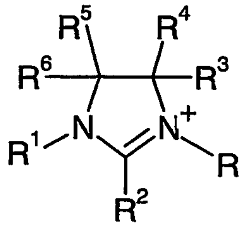
(m)

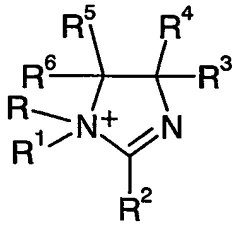
(m')

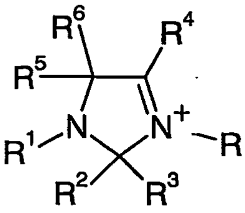
(n)

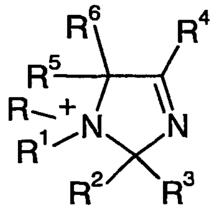
(n')

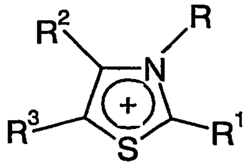
(o)

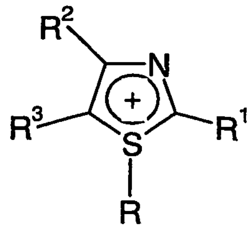
(o')

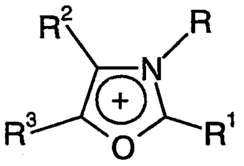
(p)

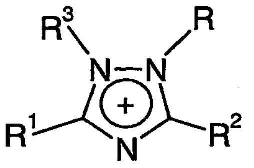
(q)

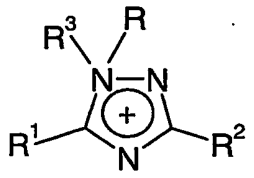
(q')

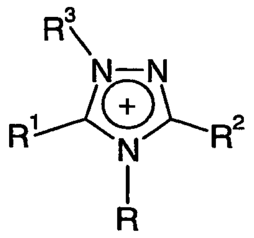
(q")

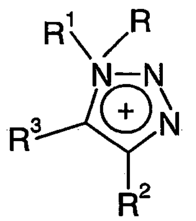
(r)

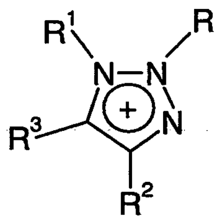
(r')

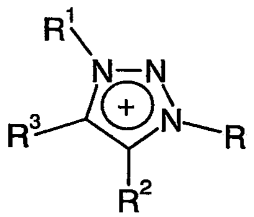
(r")

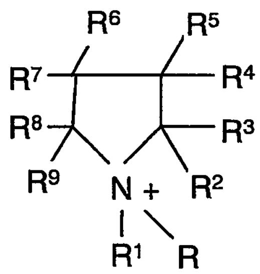
(s)

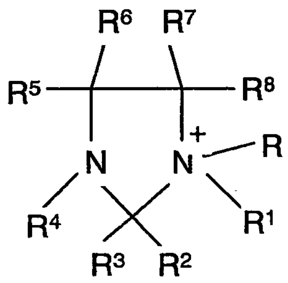
(t)

sowie Oligo- bzw. Polymere, die diese Strukturen enthalten, worin die Substituenten und Indices folgende Bedeutung haben: R ist Wasserstoff oder ein $C_1$-$C_{18}$ Alkylrest, bevorzugt ein $C_1$ bis $C_{10}$-Alkylrest, besonders bevorzugt ein $C_1$-$C_6$-Alkylrest, beispielsweise Methyl, Ethyl, n-Propyl, Isopropyl, n-Butyl, sek-Butyl, tert.-Butyl, n-Pentyl (n-Amyl), 2-Pentyl (sek-Amyl), 3-Pentyl, 2,2-Dimethyl-prop-1-yl (neo-Pentyl) und n-Hexyl, und ganz besonders bevorzugt Methyl.

$R^1$, $R^2$, $R^3$, $R^4$, $R^5$ und $R^6$ sind unabhängig voneinander jeweils Wasserstoff, $C_1$-$C_{18}$-Alkyl, gegebenenfalls durch ein oder mehrere nicht-benachbarte Sauerstoff- und/oder Schwefelatome und/oder ein oder mehrere substituierte oder unsubstituierte Iminogruppen unterbrochenes $C_2$-$C_{18}$-Alkyl, $C_6$-$C_{14}$-Aryl, $C_5$-$C_{12}$-Cycloalkyl oder ein fünf- bis sechsgliedriger, Sauerstoff-, Stickstoff- und/oder Schwefelatome aufweisender Heterocyclus, wobei zwei von ihnen auch gemeinsam einen ungesättigten, gesättigten oder aromatischen, gegebenenfalls durch ein oder mehrere nicht-benachbarte Sauerstoff- und/oder Schwefelatome und/oder ein oder mehrere substituierte oder unsubstituierte Iminogruppen unterbrochenen Ring bilden können, wobei die genannten Reste jeweils zusätzlich durch funktionelle Gruppen, Aryl, Alkyl, Aryloxy, Alkyloxy, Halogen, Heteroatome und/oder Heterocyclen substituiert sein können.

Gegebenenfalls durch funktionelle Gruppen, Aryl, Alkyl, Aryloxy, Alkyloxy, Halogen, Heteroatome und/oder Heterocyclen substituiertes $C_1$-$C_{18}$-Alkyl ist beispielsweise Methyl, Ethyl, Propyl, Isopropyl, n-Butyl, sec-Butyl, tert.-Butyl, Pentyl, Hexyl, Heptyl, Octyl, 2-Ethylhexyl, 2,4,4-Trimethylpentyl, Decyl, Dodecyl, Tetradecyl, Hetadecyl, Octadecyl, 1,1-Dimethylpropyl, 1,1-Dimethylbutyl, 1,1,3,3-Tetramethylbutyl, Benzyl, 1-Phenylethyl, 2,2-Dimethylbenzyl, Benzhydryl, p-Tolylmethyl, 1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonylethyl, 2-Ethoxycarbonylethyl, 2-Butoxycarbonylpropyl, 1,2-Di(methoxycarbonyl) ethyl, 2-Methoxyethyl, 2-Ethoxyethyl, 2-Butoxyethyl, Diethoxymethyl, Diethoxyethyl, 1,3-Dioxolan-2-yl, 1,3-Dioxan-2-yl, 2-Methyl-1,3-dioxolan-2-yl, 4-Methyl-1,3-dioxolan-2-yl, 2-Isopropoxyethyl, 2-Butoxypropyl, 2-Octyloxyethyl, Chlormethyl, Trichlormethyl, Trifluormethyl, 1,1-Dimethyl-2-chlorethyl, 2-Methoxyisopropyl, 2-Ethoxyethyl, Butylthiomethyl, 2-Dodecylthioethyl, 2-Phenylthioethyl, 2,2,2-Trifluorethyl, 2-Hydroxyethyl, 2-Hydroxypropyl, 3-Hydroxypropyl, 4-Hydroxybutyl, 6-Hydroxyhexyl, 2-Aminoethyl, 2-Aminopropyl, 4-Aminobutyl, 6-Aminohexyl, 2-Methylaminoethyl, 2-Methylaminopropyl, 3-Methylaminopropyl, 4-Methylaminobutyl, 6-Methylaminohexyl, 2-Dimethylaminoethyl, 2-Dimethylaminopropyl, 3-Dimethylaminopropyl, 4-Dimethylaminobutyl, 6-Dimethylaminohexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl oder 6-Ethoxyhexyl.

Gegebenenfalls durch ein oder mehrere nicht-benachbarte Sauerstoff- und/oder Schwefelatome und/oder ein oder mehrere substituierte oder unsubstituierte Iminogruppen unterbrochenes $C_2$-$C_{18}$-Alkyl bedeutet beispielsweise 5-Hydroxy-3-oxa-pentyl, 8-Hydroxy-3,6-dioxa-octyl, 11-Hydroxy-3,6,9-trioxa-undecyl, 7-Hydroxy-4-oxa-heptyl, 11-Hydroxy-4,8-dioxa-undecyl, 15-Hydroxy-4,8,12-trioxa-pentadecyl, 9-Hydroxy-5-oxa-nonyl, 14-Hydroxy-5,10-oxa-tetradecyl, 5-Methoxy-3-oxa-pentyl, 8-Methoxy-3,6-dioxa-octyl, 11-Methoxy-3,6,9-trioxa-undecyl, 7-Methoxy-4-oxa-heptyl, 11-Methoxy-4,8-dioxa-undecyl, 15-Methoxy-4,8,12-trioxa-pentadecyl, 9-Methoxy-5-oxa-nonyl, 14-Methoxy-5,10-oxa-tetradecyl, 5-Ethoxy-3-oxa-pentyl, 8-Ethoxy-3,6-dioxa-octyl, 11-Ethoxy-3,6,9-trioxa-undecyl, 7-Ethoxy-4-oxa-heptyl, 11-Ethoxy-4,8-dioxa-undecyl, 15-Ethoxy-4,8,12-trioxa-pentadecyl, 9-Ethoxy-5-oxa-nonyl oder 14-Ethoxy-5,10-oxatetradecyl.

Bilden zwei Reste einen Ring, so können diese Reste gemeinsam beispielsweise als anellierter Baustein 1,3-Propylen, 1,4-Butylen, 2-Oxa-1,3-propylen, 1-Oxa-1,3-propylen, 2-Oxa-1,3-propenylen, 1-Aza-1,3-propenylen, 1-$C_1$-$C_4$-Alkyl-1-aza-1,3-propenylen, 1,4-Buta-1,3-dienylen, 1-Aza-1,4-buta-1,3-dienylen oder 2-Aza-1,4-buta-1,3-dienylen bilden.

Die Anzahl der nicht-benachbarten Sauerstoff- und/oder Schwefelatome und/oder Iminogruppen ist grundsätzlich nicht beschränkt, bzw. beschränkt sich automatisch durch die Größe des Rest oder des Ringbausteins. In der Regel beträgt sie nicht mehr als 5 in dem jeweiligen Rest, bevorzugt nicht mehr als 4 oder ganz besonders bevorzugt nicht mehr als 3. Weiterhin befinden sich zwischen zwei Heteroatomen in der Regel mindestens ein, bevorzugt mindestens zwei Kohlenstoffatom(e).

Substituierte und unsubstituierte Iminogruppen können beispielsweise Imino-, Methylimino-, iso-Propylimino, n-Butylimino oder tert-Butylimino sein.

Unter dem Begriff "funktionelle Gruppen" sind beispielsweise die folgenden zu verstehen: Carboxy, Carboxamid, Hydroxy, Di-($C_1$-$C_4$-Alkyl)-amino, $C_1$-$C_4$-Alkyloxycarbonyl, Cyano oder $C_1$-$C_4$-Alkoxy. Dabei ist $C_1$ bis $C_4$-Alkyl Methyl, Ethyl, Propyl, Isopropyl, n-Butyl, sec-Butyl oder tert.-Butyl.

Gegebenenfalls durch funktionelle Gruppen, Aryl, Alkyl, Aryloxy, Alkyloxy, Halogen, Heteroatome und/oder Heterocyclen substituiertes $C_6$-$C_{14}$-Aryl bedeutet beispielsweise Phenyl, Tolyl, Xylyl, $\alpha$-Naphthyl, $\beta$-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, iso-Propylphenyl, tert.-Butylphenyl, Dodecylphenyl, Methoxyphenyl, Dimethoxyphenyl, Ethoxyphenyl, Hexyloxyphenyl, Methylnaphthyl, I-sopropylnaphthyl, Chlornaphthyl, Ethoxynaphthyl, 2,6-Dimethylphenyl, 2,4,6-Trimethylphenyl, 2,6-Dimethoxyphenyl, 2,6-Dichlorphenyl, 4-Bromphenyl, 2- oder 4-Nitrophenyl, 2,4- oder 2,6-Dinitrophenyl, 4-Dimethylaminophenyl, 4-Acetylphenyl, Methoxyethylphenyl oder Ethoxymethylphenyl.

Gegebenenfalls durch funktionelle Gruppen, Aryl, Alkyl, Aryloxy, Halogen, Heteroatome und/oder Heterocyclen substituiertes $C_5$-$C_{12}$-Cycloalkyl bedeutet beispielsweise Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl sowie ein gesättigtes oder ungesättigtes bicyclisches System wie Norbornyl oder Norbornenyl.

Ein durch die entsprechenden Gruppen gegebenenfalls substituierter fünf- bis sechsgliedriger, Sauerstoff-, Stickstoff- und/oder Schwefelatome aufweisender Heterocyclus ist beispielsweise Furyl, Thiophenyl, Pyrryl, Pyridyl, Indolyl, Benzoxazolyl, Dioxolyl, Dioxyl, Benzimidazolyl, Dimethylpyridyl, Methylchinolyl, Dimethylpyryl Methoxyfuryl, Dimethoxypyridyl, Difluorpyridyl, Methylthiophenyl, Isopropylthiophenyl oder tert.-Butylthiophenyl.

Bevorzugt sind $R^1$, $R^2$, $R^3$, $R^4$, $R^5$ und $R^6$ unabhängig voneinander Wasserstoff, Methyl, Ethyl, n-Butyl, 2-Hydroxyethyl, 2-Cyanoethyl, 2-(Methoxycarbonyl)ethyl, 2-(Ethoxycarbonyl)ethyl, 2-(n-Butoxycarbonyl)ethyl, Dimethylamino, Diethylamino und Chlor.

Besonders bevorzugte Pyridiniumionen (Ia) sind solche, bei denen einer der Reste $R^1$ bis $R^5$ Methyl, Ethyl oder Chlor ist und alle anderen Wasserstoff sind, oder $R^3$ Dimethylamino und alle anderen Wasserstoff sind, oder alle Wasserstoff sind, oder $R^2$ Carboxy oder Carboxamid und alle anderen Wasserstoff, oder $R^1$ und $R^2$ oder $R^2$ und $R^3$

1,4-Buta-1,3-dienylen und alle anderen Wasserstoff sind.

Ganz besonders bevorzugte Pyridiniumionen (Ia) sind solche, bei denen einer der Reste $R^1$ bis $R^5$ Wasserstoff, Methyl oder Ethyl ist und alle anderen Wasserstoff sind.

Besonders bevorzugte Pyridaziniumionen (Ib) sind solche, bei denen einer der Reste $R^1$ bis $R^4$ Methyl oder Ethyl und alle anderen Wasserstoff oder alle Wasserstoff sind.

Besonders bevorzugte Pyrimidiniumionen (Ic) sind solche, bei denen $R^2$ bis $R^4$ Wasserstoff oder Methyl und $R^1$ Wasserstoff, Methyl oder Ethyl ist, oder $R^2$ und $R^4$ Methyl, $R^3$ Wasserstoff und $R^1$ Wasserstoff, Methyl oder Ethyl ist.

Besonders bevorzugte Pyraziniumionen (Id) sind solche, bei denen $R^1$ bis $R^4$ Wasserstoff oder Methyl und $R^1$ Wasserstoff, Methyl oder Ethyl ist, oder $R^2$ und $R^4$ Methyl, $R^3$ Wasserstoff und $R^1$ Wasserstoff, Methyl oder Ethyl ist, oder alle Methyl oder alle Wasserstoff sind.

Besonders bevorzugte Imidazoliumionen (Ie) sind solche, bei denen unabhängig voneinander $R^1$ ausgewählt ist unter Methyl, Ethyl, n-Propyl, n-Butyl, n-Pentyl, 2-Hydroxyethyl oder 2-Cyanoethyl und $R^2$ bis $R^4$ unabhängig voneinander Wasserstoff, Methyl oder Ethyl bedeuten.

Besonders bevorzugte Pyrazoliumionen (If) sind solche, bei denen unabhängig voneinander $R^1$ unter Wasserstoff, Methyl und Ethyl, $R^2$, $R^3$ und $R^4$ aus Wasserstoff und Methyl ausgewählt sind.

Besonders bevorzugte Pyrazoliumionen (Ig) bzw. (Ig') sind solche, bei denen unabhängig voneinander $R^1$ aus Wasserstoff, Methyl und Ethyl und $R^2$, $R^3$ und $R^4$ aus Wasserstoff und Methyl ausgewählt sind.

Besonders bevorzugte Pyrazoliumionen (Ih) sind solche, bei denen unabhängig voneinander $R^1$ bis $R^4$ unter Wasserstoff und Methyl, ausgewählt sind.

Besonders bevorzugte 1-Pyrazoliniumionen (Ii) sind solche, bei denen unabhängig voneinander $R^1$ bis $R^6$ aus Wasserstoff und Methyl ausgewählt sind.

Besonders bevorzugte 2-Pyrazoliniumionen (Ij) bzw. (Ij') sind solche, bei denen unabhängig voneinander $R^1$ unter Wasserstoff, Methyl, Ethyl und Phenyl und $R^2$ bis $R^6$ aus Wasserstoff und Methyl ausgewählt sind.

Besonders bevorzugte 3-Pyrazoliniumionen (Ik) sind solche, bei denen unabhängig voneinander $R^1$ und $R^2$ aus Wasserstoff, Methyl, Ethyl und Phenyl und $R^3$ bis $R^6$ aus Wasserstoff und Methyl ausgewählt sind.

Besonders bevorzugte Imidazoliniumionen (Il) sind solche, bei denen unabhängig voneinander $R^1$ und $R^2$ aus Wasserstoff, Methyl, Ethyl, n-Butyl und Phenyl und $R^3$ und $R^4$ aus Wasserstoff, Methyl und Ethyl und $R^5$ oder $R^6$ aus Wasserstoff und Methyl ausgewählt sind.

Besonders bevorzugte Imidazoliniumionen (Im) bzw. (Im') sind solche, bei denen unabhängig voneinander $R^1$ und $R^2$ unter Wasserstoff, Methyl und Ethyl und $R^3$ bis $R^6$ aus Wasserstoff und Methyl ausgewählt sind.

Besonders bevorzugte Imidazoliniumionen (In) bzw. (In') sind solche, bei denen unabhängig voneinander $R^1$, $R^2$ und $R^3$ aus Wasserstoff, Methyl und Ethyl und $R^4$ bis $R^6$ aus Wasserstoff und Methyl ausgewählt sind.

Besonders bevorzugte Thiazoliumionen (Io) bzw. (Io') oder Oxazoliumionen (Ip) sind solche, bei denen unabhängig voneinander $R^1$ aus Wasserstoff, Methyl, Ethyl und Phenyl und $R^2$ und $R^3$ aus Wasserstoff und Methyl ausgewählt sind.

Besonders bevorzugte 1,2,4-Triazoliumionen (Iq) bzw. (Iq') oder (Iq") sind solche, bei denen unabhängig voneinander $R^1$ und $R^2$ aus Wasserstoff, Methyl, Ethyl und Phenyl und $R^3$ aus Wasserstoff, Methyl und Phenyl ausgewählt sind.

Besonders bevorzugte 1,2,3-Triazoliumionen (Ir), (Ir') bzw. (Ir") sind solche, bei denen unabhängig voneinander $R^1$ aus Wasserstoff, Methyl und Ethyl und $R^2$ und $R^3$ aus Wasserstoff und Methyl ausgewählt sind oder $R^2$ und $R^3$ 1,4-Buta-1,3-dienylen und alle anderen Wasserstoff sind.

Besonders bevorzugte Pyrrolidiniumionen (Is) sind solche, bei denen unabhängig voneinander $R^1$ aus Wasserstoff, Methyl, Ethyl und Phenyl und $R^2$ bis $R^9$ aus Wasserstoff und Methyl ausgewählt sind.

Besonders bevorzugte Imidazolidiniumionen (It) sind solche, bei denen unabhängig voneinander $R^1$ und $R^4$ aus Wasserstoff, Methyl, Ethyl und Phenyl und $R^2$ und $R^3$ sowie $R^5$ bis $R^8$ aus Wasserstoff und Methyl ausgewählt sind.

Unter den vorstehend genannten heterocyclischen Kationen sind die Pyridiniumionen und die Imidazoliniumionen bevorzugt.

Insbesondere bevorzugte Kationen sind 1,3-$C_1$-$C_4$ Dialkylimidazolium, 3-Chlorpyridinium, 4-Dimethylaminopyridinium, 2-Ethyl-4-aminopyridinium, 2-Methylpyridinium, 2-Ethylpyridinium, 2-Ethyl-6-methylpyridinium, Chinolinium, Isochinolinium, Pyridinium, 1-$C_1$-$C_4$-Alkylimidazolium, 1-Methylimidazolium, 1,2-Dimethylimidazolium, 1-n-Butylimidazolium, 1,4,5-Trimethylimidazolium, 1,4-Dimethylimidazolium, Imidazolium, 2-Methylimidazolium, 1-Butyl-2-methylimidazolium, 4-Methylimidazolium, , 1-(2'-Aminoethyl)imidazolium, 1-Vinylimidazolium, 2-Ethylimidazolium, und Benzotriazolium, wobei diese am Stickstoff mit den Resten R quaternisiert sind. Insbesondere bevorzugt sind 1-n-Butylimidazolium, 1-Methylimidazolium, 2-Methylpyridinium 2-Ethylpyridinium, 1-Butyl-3-Methylimidazolium und 1-Ethyl-3-Methylimidazolium.

Weiterhin geeignete Kationen sind quartäre Ammoniumionen der Formel (II)

$$NRR^aR^bR^{c+} \qquad (II)$$

und quartäre Phosphoniumionen der Formel (III)

$$PRR^aR^bR^{c+} \quad (III).$$

$R^a$, $R^b$ und $R^c$ bedeuten unabhängig voneinander jeweils $C_1$-$C_{18}$-Alkyl, gegebenenfalls durch ein oder mehrere nicht-benachbarte Sauerstoff- und/oder Schwefelatome und/oder ein oder mehrere substituierte oder unsubstituierte Iminogruppen unterbrochenes $C_2$-$C_{18}$-Alkyl, $C_6$-$C_{14}$-Aryl oder $C_5$-$C_{12}$-Cycloalkyl, oder 5-Methoxy-3-oxa-pentyl, 8-Methoxy-3,6-dioxa-octyl, 11-Methoxy-3,6,9-trioxa-undecyl, 7-Methoxy-4-oxa-heptyl, 11-Methoxy-4,8-dioxa-undecyl, 15-Methoxy-4,8,12-trioxa-pentadecyl, 9-Methoxy-5-oxa-nonyl, 14-Methoxy-5,10-oxa-tetradecyl, 5-Ethoxy-3-oxa-pentyl, 8-Ethoxy-3,6-dioxa-octyl, 11-Ethoxy-3,6,9-trioxa-undecyl, 7-Ethoxy-4-oxa-heptyl, 11-Ethoxy-4,8-dioxa-undecyl, 15-Ethoxy-4,8,12-trioxa-pentadecyl, 9-Ethoxy-5-oxa-nonyl oder 14-Ethoxy-5,10-oxa-tetradecyl oder einen fünf- bis sechsgliedrigen, Sauerstoff-, Stickstoff- und/oder Schwefelatome aufweisenden Heterocyclus oder zwei davon, die gemeinsam einen ungesättigten, gesättigten oder aromatischen und gegebenenfalls durch ein oder mehrere Sauerstoff- und/oder Schwefelatome und/oder ein oder mehrere substituierte oder unsubstituierte Iminogruppen unterbrochenen Ring bilden, wobei die genannten Reste jeweils durch funktionelle Gruppen, Aryl, Alkyl, Aryloxy, Alkyloxy, Halogen, Heteroatome und/oder Heterocyclen substituiert sein können, mit der Maßgabe, dass mindestens zwei der drei Reste $R^a$, $R^b$ und $R^c$ unterschiedlich sind und die Reste $R^a$, $R^b$ und $R^c$ zusammen mindestens 8, bevorzugt mindestens 10, besonders bevorzugt mindestens 12 und ganz besonders bevorzugt mindestens 13 Kohlenstoffatome aufweisen.

Darin bedeutet R Wasserstoff oder einen $C_1$ bis $C_{18}$ Alkylrest, bevorzugt einen $C_1$ bis $C_{10}$-Alkylrest, besonders bevorzugt einen $C_1$ bis $C_6$-Alkylrest, beispielsweise Methyl, Ethyl, n-Propyl, Isopropyl, n-Butyl, sec-Butyl, tert.Butyl, n-Pentyl (n-Amyl), 2-Pentyl (sek-Amyl), 3-Pentyl, 2,2-Dimethyl-prop-1-yl (neo-Pentyl) und n-Hexyl, und ganz besonders bevorzugt Methyl.

Bevorzugt sind $R^a$, $R^b$ und $R^c$ unabhängig voneinander jeweils $C_1$-$C_{18}$-Alkyl, $C_6$-$C_{12}$-Aryl oder $C_5$-$C_{12}$-Cycloalkyl und besonders bevorzugt $C_1$-$C_{18}$-Alkyl, wobei die genannten Reste jeweils durch funktionelle Gruppen, Aryl, Alkyl, Aryloxy, Alkyloxy, Halogen, Heteroatome und/oder Heterocyclen substituiert sein können.

Beispiele für die jeweiligen Gruppen sind bereits oben aufgeführt.

Bevorzugt sind die Reste $R^a$, $R^b$ und $R^c$ Methyl, Ethyl, n-Propyl, Isopropyl, n-Butyl, sec-Butyl, tert.Butyl, n-Pentyl (n-Amyl), 2-Pentyl (sek-Amyl), 3-Pentyl, 2,2-Dimethylprop-1-yl (neo-Pentyl), n-Hexyl, n-Heptyl, n-Octyl, iso-Octyl, 2-Ethylhexyl, 1,1-Dimethylpropyl, 1,1-Dimethylbutyl, Benzyl, 1-Phenylethyl, 2-Phenylethyl, $\alpha,\alpha$-Dimethylbenzyl, Phenyl, Tolyl, Xylyl, $\alpha$-Naphthyl, $\beta$-Naphthyl, Cyclopentyl oder Cyclohexyl.

Bilden zwei Reste $R^a$, $R^b$ und $R^c$ eine Kette, so kann dies beispielsweise 1,4-Butylen oder 1,5-Pentylen sein.

Beispiele für die tertiären Amine, von denen sich die quatären Ammoniumionen der allgemeinen Formel (II) durch Quaternisierung mit den genannten Resten R ableiten, sind Diethyl-n-butylamin, Diethyl-tert-butylamin, Diethyl-n-pentylamin, Diethylhexylamin, Diethyloctylamin, Diethyl-(2-ethylhexyl)-amin, Di-n-propylbutylamin, Din-propyl-n-pentylamin, Di-n-propylhexylamin, Di-n-propyloctylamin, Di-n-propyl-(2-ethylhexyl)-amin, Di-isopropylethylamin, Di-iso-propyl-n-propylamin, Di-isopropylbutylamin, Di-isopropylpentylamin, Di-iso-propylhexylamin, Di-isopropyloctylamin, Di-isopropyl-(2-ethylhexyl)-amin, Di-n-butylethylamin, Di-n-butyl-n-propylamin, Din-butyl-n-pentylamin, Di-n-butylhexylamin, Di-n-butyloctylamin, Di-n-butyl-(2-ethylhexyl)-amin, N-n-Butyl-pyrrolidin, N-sek-Butylpyrrodidin, N-tert-Butylpyrrolidin, N-n-Pentylpyrrolidin, N,N-Dimethylcyclohexylamin, N,N-Diethylcyclohexylamin, N,N-Di-n-butylcyclohexylamin, N-n-Propylpiperidin, N-iso-Propylpiperidin, N-n-Butyl-piperidin, N-sek-Butylpiperidin, N-tert-Butylpiperidin, N-n-Pentylpiperidin, N-n-Butylmorpholin, N-sek-Butylmorpholin, N-tert-Butylmorpholin, N-n-Pentylmorpholin, N-Benzyl-N-ethylanilin, N-Benzyl-N-n-propylanilin, N-Benzyl-N-iso-propylanilin, N-Benzyl-N-n-butylanilin, N,N-Dimethyl-p-toluidin, N,N-Diethyl-p-toluidin, N,N-Di-n-butyl-p-toluidin, Diethylbenzylamin, Di-n-propylbenzylamin, Di-n-butylbenzylamin, Diethylphenylamin, Di-n-Propylphenylamin und Di-n-Butylphenylamin.

Bevorzugte tertiäre Amine (II) sind Di-iso-propylethylamin, Diethyl-tert-butylamin, Di-iso-propylbutylamin, Di-n-butyl-n-pentylamin, N,N-Di-n-butylcyclohexylamin sowie tertiäre Amine aus Pentylisomeren.

Besonders bevorzugte tertiäre Amine sind Di-n-butyl-n-pentylamin und tertiäre Amine aus Pentylisomeren. Ein weiteres bevorzugtes tertiäres Amin, das drei identische Reste aufweist, ist Triallylamin.

Weitere geeignete Kationen sind Guanidiniumionen der allgemeinen Formel (III)

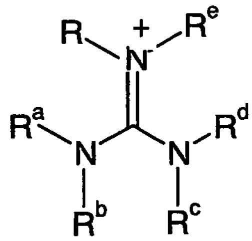

(III),

und Choliniumionen der allgemeinen Formel (IV)

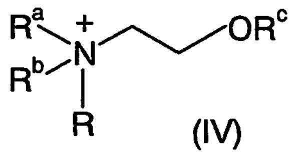

(IV)

worin

R die vorstehend definierte Bedeutung hat,

und die Reste $R^a$ bis $R^e$ unabhängig voneinander einen Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 20 Kohlenstoffatomen bedeuten, wobei die Reste $R^a$ und $R^c$ unabhängig voneinander zusätzlich auch für Wasserstoff stehen können; oder jeweils unabhängig voneinander die Reste $R^a$ und $R^b$ und/oder $R^c$ und $R^d$ zusammen mit einem zweibindigen, Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder funktionelle Gruppen unterbrochenen oder substituierten Rest mit 1 bis 30 Kohlenstoffatomen bedeuten und die verbleibenden Reste/der verbleibende Rest wie zuvor definiert sind/ist; oder

die Reste $R^b$ und $R^c$ zusammen einen zweibindigen, Kohlenstoff enthaltenden organischen, gesättigten oder ungesättigten, acyclischen oder cyclischen, aliphatischen, aromatischen oder araliphatischen, unsubstituierten oder 1 bis 5 Heteroatome oder funktionelle Gruppen unterbrochenen oder substituierten Rest mit 1 bis 30 Kohlenstoffatomen bedeuten und die verbleibenden Reste wie zuvor definiert sind. Im Übrigen haben die Reste $R^a$ - $R^e$ die vorstehend für $R^a$-$R^c$ definierten Bedeutungen.

Besonders bevorzugte Choliniumionen (IV) sind solche, bei denen $R^c$ ausgewählt ist aus Wasserstoff, Methyl, Ethyl, Acetyl, 5-Methoxy-3-oxa-pentyl, 8-Methoxy-3,6-dioxaoctyl, 11-Methoxy-3,6,9-trioxa-undecyl, 7-Methoxy-4-oxa-heptyl, 11-Methoxy-4,8-dioxa-undecyl, 15-Methoxy-4,8,12-trioxa-pentadecyl, 9-Methoxy-5-oxa-nonyl, 14-Methoxy-5,10-oxa-tetradecyl, 5-Ethoxy-3-oxa-pentyl, 8-Ethoxy-3,6-dioxa-octyl, 11-Ethoxy-3,6,9-trioxa-undecyl, 7-Ethoxy-4-oxa-heptyl, 11-Ethoxy-4,8-dioxa-undecyl, 15-Ethoxy-4,8,12-trioxa-pentadecyl, 9-Ethoxy-5-oxa-nonyl oder 14-Ethoxy-5,10-oxatetradecyl.

Als Anionen sind prinzipiell alle Anionen einsetzbar.

Das Anion $[Y]^{n-}$ der ionischen Flüssigkeit ist beispielsweise ausgewählt aus

- der Gruppe der Halogenide und halogenhaltigen Verbindungen der Formel: $F^-$, $Cl^-$, $Br^-$, $I^-$, $BF_4^-$, $PF_6^-$, $AlCl_4^-$, $Al_2Cl_7^-$, $Al_3Cl_{10}^-$, $AlBr_4^-$, $FeCl_4^-$, $BCl_4^-$, $SbF_6^-$, $AsF_6$,$^-ZnCl_3^-$, $SnCl_3^-$, $CuCl_2^-$, $CF_3SO_3^-$, $(CF_3SO_3)_2N^-$, $CF_3CO_2^-$, $CCl_3CO_2^-$, $CN^-$, $SCN^-$, $OCN^-$
- der Gruppe der Sulfate, Sulfite und Sulfonate der allgemeinen Formel: $SO_4^{2-}$, $HSO_4^-$, $SO_3^{2-}$, $HSO_3^-$, $R^aOSO_3^-$, $R^aSO_3^-$
- der Gruppe der Phosphate der allgemeinen Formel $PO_4^{3-}$, $HPO_4^{2-}$, $H_2PO_4^-$, $R^aPO_4^{2-}$, $HR^aPO_4^-$, $R^aR^bPO_4^-$
- der Gruppe der Phosphonate und Phosphinate der allgemeinen Formel: $R^aHPO_3^-$,$R^aR^bPO_2^-$, $R^aR^bPO_3^-$
- der Gruppe der Phosphite der allgemeinen Formel: $PO_3^{3-}$, $HPO_3^{2-}$, $H_2PO_3^-$, $R^aPO_3^{2-}$, $R^aHPO_3^-$; $R^aR^bPO_3^-$
- der Gruppe der Phosphonite und Phosphinite der allgemeinen Formel: $R^aR^bPO_2^-$, $R^aHPO_2^-$, $R^3R^bPO^-$, $R^aHPO^-$
- der Gruppe der Carbonsäuren der allgemeinen Formel: $R^3COO^-$
- der Gruppe der Borate der allgemeinen Formel: $BO_3^{3-}$, $HBO_3^{2-}$, $H_2BO_3^-$, $R^aR^bBO_3^-$, $R^3HBO_3^-$, $R^aBO_3^{2-}$, $B(OR^a)$

$(OR^b)(OR^c)(OR^d)^-$, $B(HSO_4)^-$, $B(R^aSO4)^-$

- der Gruppe der Boronate der allgemeinen Formel: $R^aBO_2^{2-}$, $R^aR^bBO^-$
- der Gruppe der Carbonate und Kohlensäureester der allgemeinen Formel: $HCO_3^-$, $CO_3^{2-}$, $R^aCO_3^-$
- der Gruppe der Silikate und Kieselsäuresäureester der allgemeinen Formel: $SiO_4^{4-}$, $HSiO_4^{3-}$, $H_2SiO_4^{2-}$, $H_3SiO_4^-$, $R^aSiO_4^{3-}$, $R^aR^bSiO_4^{2-}$, $R^aR^bR^cSiO_4^-$, $HR^{a-}$ $SiO_4^{2-}$, $H_2R^aSiO_4^-$, $HR^aR^bSiO_4^-$
- der Gruppe der Alkyl- bzw. Arylsilan-Salze der allgemeinen Formel: $R^aSiO_3^{3-}$, $R^aR^bSiO_2^{2-}$, $R^aR^bR^cSiO^-$, $R^3R^bR^cSiO_3^-$, $R^aR^bR^cSiO_2^-$, $R^aR^bSiO_3^{2-}$
- der Gruppe der Carbonsäureimide, Bis(sulfonyl)imide und Sulfonylimide der allgemeinen Formel:

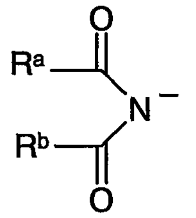 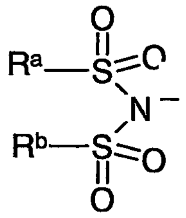 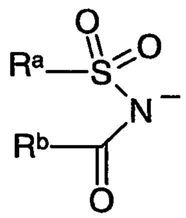

- der Gruppe der Alkoxide und Aryloxide der allgemeinen Formel: $R^aO^-$
- der Gruppe der komplexen Metallionen wie $Fe(CN)_6^{3-}$, $Fe(CN)_6^{4-}$, $MnO_4^-$, $Fe(CO)_4^-$

Darin bedeuten $R^a$, $R^b$, $R^c$ und $R^d$ unabhängig voneinander jeweils Wasserstoff, $C_1$-$C_{18}$-Alkyl, gegebenenfalls durch ein oder mehrere nicht-benachbarte Sauerstoff- und/oder Schwefelatome und/oder ein oder mehrere substituierte oder unsubstituierte Iminogruppen unterbrochenes $C_2$-$C_{18}$-Alkyl, $C_6$-$C_{14}$-Aryl, $C_5$-$C_{12}$-Cycloalkyl oder einen fünf- bis sechsgliedrigen, Sauerstoff-, Stickstoff- und/oder Schwefelatome aufweisenden Heterocyclus, wobe zwei von ihnen gemeinsam einen ungesättigten, gesättigten oder aromatischen, gegebenenfalls durch ein oder mehrere Sauerstoff- und/oder Schwefelatome und/oder ein oder mehrere unsubstituierte oder substituierte Iminogruppen unterbrochenen Ring bilden können, wobei die genannten Reste jeweils zusätzlich durch funktionelle Gruppen, Aryl, Alkyl, Aryloxy, Alkyloxy, Halogen, Heteroatome und/oder Heterocyclen substituiert sein können.

Darin sind gegebenenfalls durch funktionelle Gruppen, Aryl, Alkyl, Aryloxy, Alkyloxy, Halogen, Heteroatome und/oder Heterocyclen substituiertes $C_1$-$C_{18}$-Alkyl beispielsweise Methyl, Ethyl, Propyl, Isopropyl, n-Butyl, sec-Butyl, tert.-Butyl, Pentyl, Hexyl, Heptyl, Octyl, 2-Ethylhexyl, 2,4,4-Trimethylpentyl, Decyl, Dodecyl, Tetradecyl, Hetadecyl, Octadecyl, 1,1-Dimethylpropyl, 1,1-Dimethylbutyl, 1,1,3,3-Tetramethylbutyl, Benzyl, 1-Phenylethyl, $\alpha,\alpha$-Dimethylbenzyl, Benzhydryl, p-Tolylmethyl, 1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonethyl, 2-Ethoxycarbonylethyl, 2-Butoxycarbonylpropyl, 1,2-Di-(methoxycarbonyl)-ethyl, 2-Methoxyethyl, 2-Ethoxyethyl, 2-Butoxyethyl, Diethoxymethyl, Diethoxyethyl, 1,3-Dioxolan-2-yl, 1,3-Dioxan-2-yl, 2-Methyl-1,3-dioxolan-2-yl, 4-Methyl-1,3-dioxolan-2-yl, 2-Isopropoxyethyl, 2-Butoxypropyl, 2-Octyloxyethyl, Chlormethyl, Trichlormethyl, Trifluormethyl, 1,1-Dimethyl-2-chlorethyl, 2-Methoxyisopropyl, 2-Ethoxyethyl, Butylthiomethyl, 2-Dodecylthioethyl, 2-Phenlythioethyl, 2,2,2-Trifluorethyl, 2-Hydroxyethyl, 2-Hydroxypropyl, 3-Hydroxypropyl, 4-Hydroxybutyl, 6-Hydroxyhexyl, 2-Aminoethyl, 2-Aminopropyl, 4-Aminobutyl, 6-Aminohexyl, 2-Methylaminoethyl, 2-Methylaminopropyl, 3-Methylaminopropyl, 4-Methylaminobutyl, 6-Methylaminohexyl, 2-Dimethylaminoethyl, 2-Dimethylaminopropyl, 3-Dimethylaminopropyl, 4-Dimethylaminobutyl, 6-Dimethylaminohexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl oder 6-Ethoxyhexyl.

Gegebenenfalls durch ein oder mehrere nicht-benachbarte Sauerstoff- und/oder Schwefelatome und/oder ein oder mehrere substituierte oder unsubstituierte Iminogruppen unterbrochenes $C_2$-$C_{18}$-Alkyl sind beispielsweise 5-Hydroxy-3-oxapentyl, 8-Hydroxy-3,6-dioxaoctyl, 11-Hydroxy-3,6,9-trioxaundecyl, 7-Hydroxy-4-oxaheptyl, 11-Hydroxy-4,8-dioxaundecyl, 15-Hydroxy-4,8,12-trioxapentadecyl, 9-Hydroxy-5-oxa-nonyl, 14-Hydroxy-5,10-oxatetradecyl, 5-Methoxy-3-oxapentyl, 8-Methoxy-3,6-dioxa-octyl, 11-Methoxy-3,6,9-trioxaundecyl, 7-Methoxy-4-oxaheptyl, 11-Methoxy-4,8-dioxa-undecyl, 15-Methoxy-4,8,12-trioxapentadecyl, 9-Methoxy-5-oxanonyl, 14-Methoxy-5,10-oxatetradecyl, 5-Ethoxy-3-oxapentyl, 8-Ethoxy-3,6-dioxaoctyl, 11-Ethoxy-3,6,9-trioxaundecyl, 7-Ethoxy-4.-oxaheptyl, 11-Ethoxy-4,8-dioxaundecyl, 15-Ethoxy-4,8,12-trioxapentadecyl, 9-Ethoxy-5-oxanonyl oder 14-Ethoxy-5,10-oxatetradecyl.

Bilden zwei Reste einen Ring, so können diese Reste gemeinsam beispielsweise als anellierter Baustein 1,3-Propylen, 1,4-Butylen, 2-Oxa-1,3-propylen, 1-Oxa-1,3-propylen, 2-Oxa-1,3-propenylen, 1-Aza-1,3-propenylen, 1-$C_1$-$C_4$-Alkyl-1-aza-1,3-propenylen, 1,4-Buta-1,3-dienylen, 1-Aza-1,4-buta-1,3-dienylen oder 2-Aza-1,4-buta-1,3-dienylen bedeuten.

Die Anzahl der nicht-benachbarten Sauerstoff- und/oder Schwefelatome und/oder Iminogruppen ist grundsätzlich nicht beschränkt, bzw. beschränkt sich automatisch durch die Größe des Rests oder des Ringbausteins. In der Regel beträgt sie nicht mehr als 5 in dem jeweiligen Rest, bevorzugt nicht mehr als 4 oder ganz besonders bevorzugt nicht mehr als 3. Weiterhin befinden sich zwischen zwei Heteroatomen in der Regel mindestens ein, bevorzugt mindestens zwei Kohlenstoffatom(e).

Substituierte und unsubstituierte Iminogruppen können beispielsweise Imino-, Methylimino-, iso-Propylimino, n-Butylimino oder tert-Butylimino sein.

Unter dem Begriff "funktionelle Gruppen" sind beispielsweise die folgenden zu verstehen: Carboxy, Carboxamid, Hydroxy, Di-($C_1$-$C_4$-Alkyl)-amino, $C_1$-$C_4$-Alkyloxycarbonyl, Cyano oder $C_1$-$C_4$-Alkoxy. Dabei ist $C_1$ bis $C_4$-Alkyl Methyl, Ethyl, Propyl, Isopropyl, n-Butyl, sec-Butyl oder tert.-Butyl.

Gegebenenfalls durch funktionelle Gruppen, Aryl, Alkyl, Aryloxy, Alkyloxy, Halogen, Heteroatome und/oder Heterocyclen substituiertes $C_6$-$C_{14}$-Aryl sind beispielsweise Phenyl, Tolyl, Xylyl, $\alpha$-Naphthyl, $\beta$-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, iso-Propylphenyl, tert.-Butylphenyl, Dodecylphenyl, Methoxyphenyl, Dimethoxyphenyl, Ethoxyphenyl, Hexyloxyphenyl, Methylnaphthyl, I-sopropylnaphthyl, Chlornaphthyl, Ethoxynaphthyl, 2,6-Dimethylphenyl, 2,4,6-Trimethylphenyl, 2,6-Dimethoxyphenyl, 2,6-Dichlorphenyl, 4-Bromphenyl, 2- oder 4-Nitrophenyl, 2,4- oder 2,6-Dinitrophenyl, 4-Dimethylaminophenyl, 4-Acetylphenyl, Methoxyethylphenyl oder Ethoxymethylphenyl.

Gegebenenfalls durch funktionelle Gruppen, Aryl, Alkyl, Aryloxy, Halogen, Heteroatome und/oder Heterocyclen substituiertes $C_5$-$C_{12}$-Cycloalkyl sind beispielsweise Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl sowie ein gesättigtes oder ungesättigtes bicyclisches System wie Norbornyl oder Norbornenyl.

Ein fünf- bis sechsgliedriger, Sauerstoff-, Stickstoff- und/oder Schwefelatome aufweisender Heterocyclus ist beispielsweise Furyl , Thiophenyl, Pyryl, Pyridyl, Indolyl, Benzoxazolyl, Dioxolyl, Dioxyl, Benzimidazolyl, Benzthiazolyl, Dimethylpyridyl, Methylchinolyl, Dimethylpyryl, Methoxifuryl, Dimethoxipyridyl, Diflourpyridyl, Methylthiophenyl, Isopropylthiophenyl oder tert.-Butylthiophenyl.

Ganz besonders bevorzugte Anionen sind Chlorid, Bromid, Iodid, Thiocyanat, Acetat, $C_1$-$C_4$ Alkylsulfate, Methansulfonate, Tosylat, $C_1$-$C_4$ Dialkylphosphate, Hydrogensulfat oder Tetrachloroaluminat.

In der ionischen Flüssigkeit liegen Kationen sowie Anionen vor. Innerhalb der ionischen Flüssigkeit wird vom Kation ein Proton oder ein Alkylrest an das Anion übertragen. Hierdurch entstehen zwei neutrale Moleküle. Es liegt also ein Gleichgewicht vor, in welchem Anionen, Kationen und die zwei daraus gebildeten neutralen Moleküle vorliegen.

Die Erfindung wird durch die nachstehenden Beispiele näher erläutert.

## Beispiele

### Beispiel 1

Die ionische Flüssigkeit Methylimidazoliumchlorid wurde bei einer Chlorkohlenwasserstoffherstellung als Lösemittel eingesetzt, wobei verunreinigtes Methylimidazoliumchlorid anfiel. Das verunreinigte Methylimidazoliumchlorid enthielt im wesentlichen nicht flüchtige oder nur sehr schwer flüchtige Verunreinigungen. Gemäß HPLC-Analyse bestand die Mischung zu 96,5 Flächen-% aus Methylimidazoliumchlorid und zu 3,5 Flächen-% aus verschiedenen Verunreinigungen. Das zugehörige Chromatogramm ist in Figur 1 und Tabelle wiedergegeben.

**Tabelle 1**

| Retentionszeit [min.] | Höhe [a.u.] | Fläche [a.u.] | Flächen-% |
|---|---|---|---|
| 3.227 | 122.330 | 384.069 | 3.393 |
| 4.673 | 1.113 | 7.426 | 0.066 |
| 5.333 | 0.433 | 2.539 | 0.022 |
| 6.253 | 0.547 | 4.317 | 0.038 |
| 7.660 | 634.181 | 10.922,762 | 96.481 |

Es wurden 410 g verunreinigtes Methylimidazoliumchlorid bei 90°C unter Normaldruck in flüssigem Zustand in einem Suspensionskristallisator vorgelegt. Als Suspensionskristallisator kam ein 1 Liter-Glasrührkessel zum Einsatz, der mit einem Ankerrührer (Durchmesser 90 mm) mit etwa 100 U/min gerührt wurde. Der Glaskessel wies einen

Heiz-/Kühlmantel auf, der mit Wasser und einem Thermostat temperiert wurde.

Die flüssige Ausgangsmischung wurde zunächst auf etwa 70°C abgekühlt und dann mit 1 g Feststoff versetzt. Die sich eindickende Suspension wurde anschließend bis auf etwa 80°C aufgeheizt, bis nur noch eine geringe Menge an Impfkristallen in der Suspension vorlag. Dann erfolgte eine kontrollierte, langsame Abkühlung der angeimpften Mischung mit einer Abkühlgeschwindigkeit von 0,63 K/h über einen Zeitraum von 14 h. Es bildete sich durch die Kühlungskristallisation eine Kristallsuspension mit groben, leicht abtrennbaren Kristallen im Partikelgrößenbereich von 100 bis 1500 $\mu$m aus. Diese Kristalle sind in Figur 2 wiedergegeben. Zur Abtrennung der Kristalle von der Restflüssigkeit wurden 60 ml Suspension in einer Labor-Siebbecherzentrifuge, die auf eine Temperatur von 80°C vorgewärmt war, für drei Minuten bei 2000 U/min abgeschleudert. Dem Siebbecher wurde nach dem Schleudern 28,6 g Kristallisat entnommen. Das Kristallisat bestand gemäß HPLC-Analyse zu 100 Flächen-% aus Methylimidazoliumchlorid. Die in der verunreinigten Ausgangsmischung enthaltenen Verunreinigungen wurden im Kristallisat nicht mehr gefunden. Das zugehörige Chromatogramm ist in Figur 3 und Tabelle 2 wiedergegeben.

**Tabelle 2**

| Retentionszeit [min.] | Höhe [a.u.] | Fläche [a.u.] | Flächen-% |
|---|---|---|---|
| 7.527 | 389.910 | 4.804.483 | 100.000 |

**Beispiel 2**

Es wurde wie beim Zonenschmelzen von organischen, kristallisierenden Substanzen üblich verfahren. Dabei wird die organische, kristallisierende Substanz in die Schmelze in ein Glasrohr von definierter Länge und Durchmesser eingefüllt. Nach Kristallisation der Schmelze durch Abkühlen auf Raumtemperatur im senkrecht stehenden Rohr wird im verbleibenden Leerraum am oberen Ende die Öffnung des Rohres zugeschmolzen. Der auskristallisierte Substanzbarren ist im zugeschmolzenen Glasrohr von Umgebungsluft vollständig getrennt, Einfluss von Luftsauerstoff und Luftfeuchtigkeit ist ausgeschlossen. Das so vorbereitete Präparat wird in der horizontalen Zonenschmelzapparatur eingehängt und mit einem vorher erstellten Transport- bzw. Ziehprogramm und temperierten Heiz- und Kühlzonen gestartet. Es erfolgt durch wechselnde Anordnung der Kühl- und Heizzonen die Ausbildung von festen und flüssigen Bereichen längs des im Glasrohr eingeschlossenen Produktes. Durch langsames Ziehen des Rohres durch die Heiz- und Kühlbereiche erfolgt ein fortlaufendes Schmelzen und Kristallisieren und somit ein "Wandern" der Zonen, was die Anreicherung der in der Schmelze sich besser lösenden Verunreinigungen bewirkt.

Ergebnis ist die Anreicherung der Verunreinigungen am Ende des Rohres und hohe Reinheit des kristallisierten Bereiches vom Anfang des Rohres her.

Die in den Versuchen beschriebene Apparatur wies 20 Heizzonen und 21 Kühlzonen auf. Zur optimalen Nutzung dieser 20 Heizbereiche erfolgte ein 5 Zonenintervall, d.h. über eine Strecke von 4 Heizzonen erfolgte der langsame Kristallisationsziehprozess und anschließend der schnelle Rücktransport des Rohres in die Ausgangsposition, aus der das Rohr dann wiederum langsam gezogen wurde. Somit bewirken 5 Intervalle die Anreicherung von Verunreinigungen über die gesamte Länge des Zonenschmelzrohres, in dem fortlaufend 16 Heizzonen wirksam sind.

Die Betriebsbedingungen waren wie folgt: Durchmesser des Zonenschmelzrohres 9 mm innen, Wandstärke 1 mm, Füllhöhe bzw. Länge des Substanzbarrens 560 mm , Einsatzmenge ca. 35 g, Temperatur der Kühlzonen ca. 25°C, Temperatur der Heizzonen ca. 175°C, Ziehgeschwindigkeit bei Kristallisation 15 mm/h, bei Rückholung 5 mm/sec.

In der oben beschriebenen Zonenschmelzapparatur und mit den beschriebenen Reaktionsbedingungen konnte 1-Ethyl-3-Methylimidazoliumchlorid von 97 Gew.-% auf 99,9 Gew.-% gereinigt werden. Im dem mit den Verunreinigungen angereicherten Bereich am Rohrende lag die Reinheit des 1-Ethyl-3-Methylimidazoliumchlorids bei 95,0 Gew.-%.

**Patentansprüche**

1. Verfahren zur Aufreinigung einer ionischen Flüssigkeit der allgemeinen Formeln $[A]_n^+ [Y]^{n-}$, $[A^1]^+[A^2]^+ [Y]^{2-}$, $[A^1]^+[A^2]^+[A^3]^+ [Y]^{3-}$ oder $[A^1]^+[A^2]^+[A^3]^+[A^4]^+ [Y]^{4-}$, worin A, $A^1$, $A^2$, $A^3$ und $A^4$ unabhängig voneinander ein fünf- oder sechsgliedriger Heterocyclus mit mindestens einem Stickstoffatom und gegebenenfalls einem Sauerstoff- oder Schwefelatom sind, n 1, 2, 3 oder 4 ist und $[Y]^{n-}$ ein beliebiges ein- bis vierfach negativ geladenes Anion ist, umfassend die Schritte (a) der partiellen Kristallisation der ionischen Flüssigkeit aus ihrer Schmelze und (b) Abtrennung des Kristallisats von der Restschmelze.

2. Verfahren nach Anspruch 1, **dadurch gekennzeichnet, dass** die partielle Kristallisation diskontinuierlich durchgeführt wird.

3. Verfahren nach Anspruch 1, **dadurch gekennzeichnet, dass** die partielle Kristallisation kontinuierlich durchgeführt wird.

4. Verfahren nach einem der Ansprüche 1 bis 3, **dadurch gekennzeichnet, dass** die partielle Kristallisation statisch oder dynamisch durchgeführt wird.

5. Verfahren nach Anspruch 4, **dadurch gekennzeichnet, dass** die partielle Kristallisation als Schicht- oder Suspensionskristallisation durchgeführt wird.

6. Verfahren nach einem der Ansprüche 1 bis 5, **dadurch gekennzeichnet, dass** die partielle Kristallisation mehrstufig durchgeführt wird.

7. Verfahren nach Anspruch 6, **dadurch gekennzeichnet, dass** die partielle Kristallisation als Gegenstromkristallisation durchgeführt wird.

8. Verfahren nach Anspruch 1, **dadurch gekennzeichnet, dass** die partielle Kristallisation als Zonenschmelzverfahren durchgeführt wird.

## Claims

1. A process for purifying an ionic liquid of the general formula $[A]_n^+ [Y]^{n-}$, $[A^1]^+[A^2]^+ [Y]^{2-}$, $[A^1]^+[A^2]+[A^3]^+ [Y]^{3-}$ or $[A^1]^+ [A^2]^+[A^3]^+[A^4]^+ [Y]^{4-}$, where A, $A^1$, $A^2$, $A^3$ and $A^4$ are each, independently of one another, a five- or six-membered heterocycle having at least one nitrogen atom and if appropriate an oxygen or sulfur atom, n is 1, 2, 3, or 4 and $[Y]^{n-}$ is any anion bearing from one to four negative charges, which comprises the steps (a) partial crystallization of the ionic liquid from its melt and (b) separation of the crystals from the residual melt.

2. The process according to claim 1, wherein the partial crystallization is carried out discontinuously.

3. The process according to claim 1, wherein the partial crystallization is carried out continuously.

4. The process according to any of claims 1 to 3, wherein the partial crystallization is carried out statically or dynamically.

5. The process according to claim 4, wherein the partial crystallization is carried out as a layer or suspension crystallization.

6. The process according to any of claims 1 to 5, wherein the partial crystallization is carried out in a plurality of stages.

7. The process according to claim 6, wherein the partial crystallization is carried out as a countercurrent crystallization.

8. The process according to claim 1, wherein the partial crystallization is carried out as a zone melting process.

## Revendications

1. Procédé de purification d'un liquide ionique de formules générales $[A]_n^+[Y]^{n-}$, $[A^1]^+[A^2]+[Y]^{2-}$, $[A^1]^+[A^2]^+[A^3]^+[Y]^{3-}$ ou $[A^1]^+[A^2]^+[A^3]^+[A^4]^+[Y]^{4-}$, dans lesquelles A, $A^1$, $A^2$ $A^3$ et $A^4$ représentent, indépendamment l'un de l'autre, un hétérocycle de cinq ou six chaînons comprenant au moins un atome d'azote et le cas échéant un atome d'oxygène ou de soufre, n vaut 1, 2, 3 ou 4 et $[Y]^{n-}$ représente un anion quelconque portant une à quatre charges négatives, comprenant les étapes (a) de cristallisation partielle du liquide ionique à partir de sa masse fondue et (b) de séparation du produit cristallisé de la masse fondue résiduelle.

2. Procédé selon la revendication 1, **caractérisé en ce que** la cristallisation partielle est réalisée de manière discontinue.

3. Procédé selon la revendication 1, **caractérisé en ce que** la cristallisation partielle est réalisée de manière continue.

4. Procédé selon l'une quelconque des revendications 1 à 3, **caractérisé en ce que** la cristallisation partielle est

réalisée de manière statique ou dynamique.

**5.** Procédé selon la revendication 4, **caractérisé en ce que** la cristallisation partielle est réalisée sous forme de cristallisation en couche ou en suspension.

**6.** Procédé selon l'une quelconque des revendications 1 à 5, **caractérisé en ce que** la cristallisation partielle est réalisée en plusieurs étapes.

**7.** Procédé selon la revendication 6, **caractérisé en ce que** la cristallisation partielle est réalisée sous forme d'une cristallisation à contre-courant.

**8.** Procédé selon la revendication 1, **caractérisé en ce que** la cristallisation partielle est réalisée sous forme de procédé de fusion par zones.

Figur 1

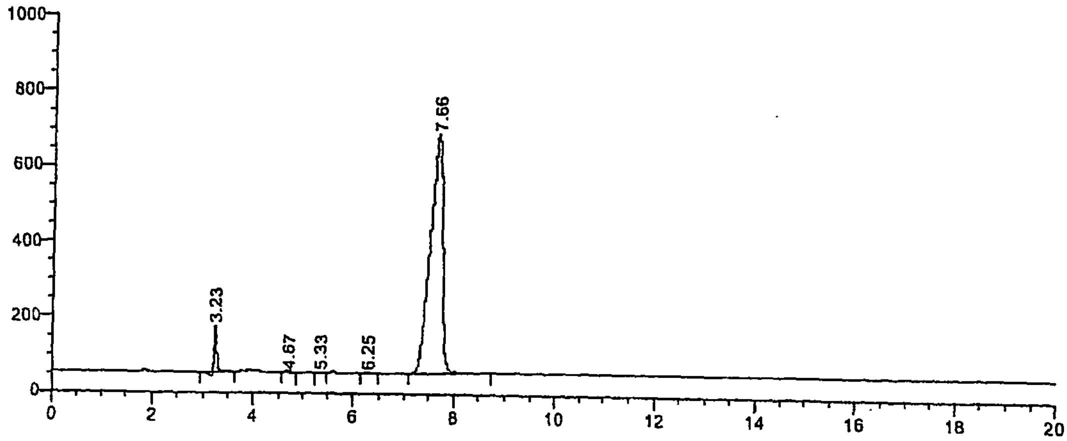

Figur 2

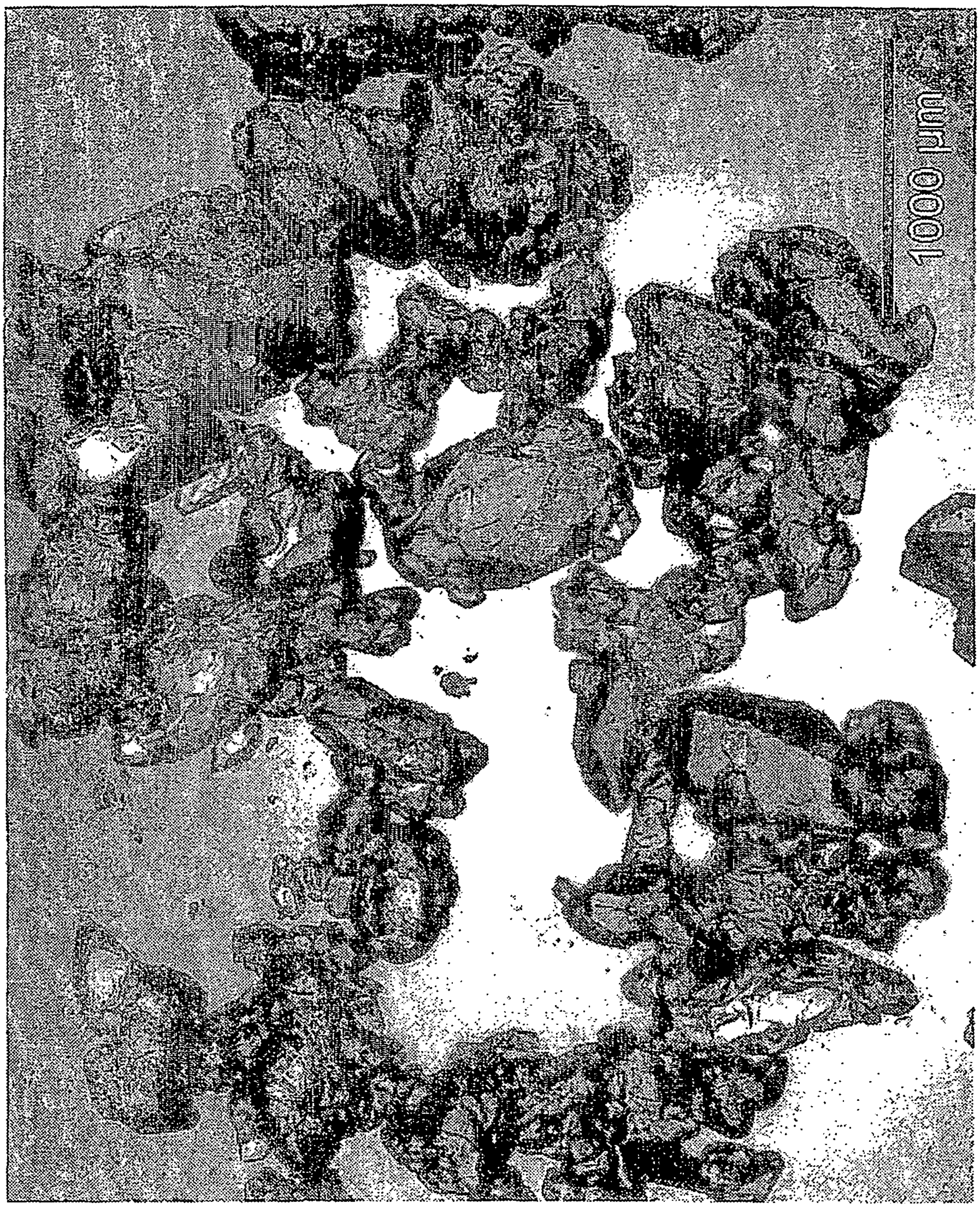

Figur 3

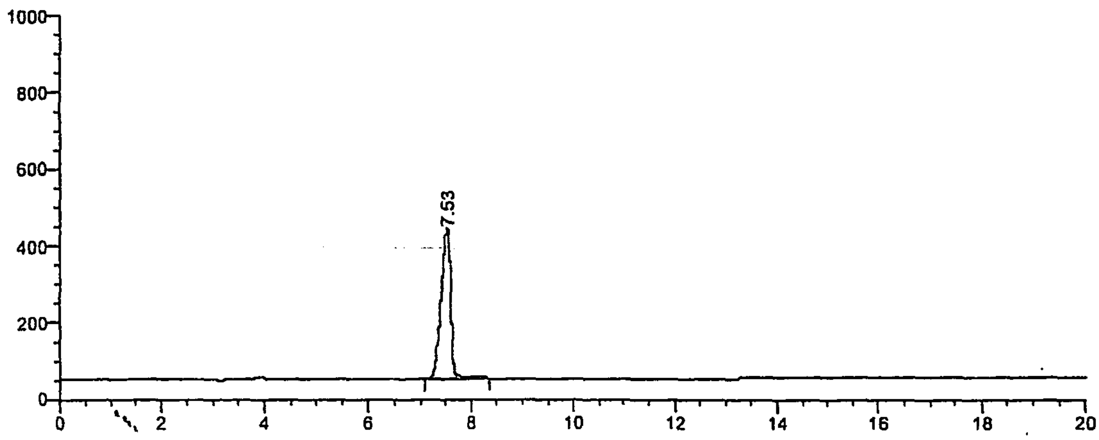

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19536792 A1
- DE 19536859 A1
- DE 10257449 A1
- EP 0616998 B1
- US 3597164 A
- DE 10202838 A1


### In der Beschreibung aufgeführte Nicht-Patentliteratur


- **PETER WASSERSCHEIDT.** Chemie in unserer Zeit. *Durchführung chemischer Reaktionen, zunehmend an Bedeutung,* 2003, vol. 37 (1), 52-63
- **P. TYSON et al.** *Electrochemical Society Proceedings,* vol. 99 (41), 161-168
- **J.F. BRENNECKE ; E.J. MAGINN.** *AlChE Journal,* 2001, vol. 47, 2384
- **J.H.J. DAVIS.** *NATO Sci. Ser. II,* 2003, vol. 92, 385
- **D.W. ROONEY ; K.R. SEDDON.** Handbook of Solvents
- Ionic Liquids. **G. WYPYCH.** Chem. Tech. Publishing. 2001
- **P. WASSERSCHEID ; T. WELTON.** Ionic Liquids in Synthesis. Wiley-VCH, 2003
- **R.D. ROGERS et al.** *Green Chemistry,* 2001, vol. 3, 156
- *Angew. Chem.,* 2000, vol. 112, 3926-3945